# EUROPEAN PATENT SPECIFICATION

(11) **EP 2 213 870 B1**
(45) Date of publication and mention of the grant of the patent: **14.12.2016**
(21) Application number: 10151682.1
(22) Date of filing: 26.01.2010
(51) Int. Cl.: F02P 5/15, F02D 41/06, F02D 41/12

(54) **Startup Control Apparatus And Method For Internal Combustion Engine**
Startsteuerungsvorrichtung und -verfahren für Verbrennungsmotor
Appareil et procédé de commande du démarrage pour moteur à combustion interne

(30) Priority: 28.01.2009 JP 2009017215
(43) Date of publication of application: 04.08.2010
(73) Proprietor: TOYOTA JIDOSHA KABUSHIKI KAISHA, Toyota-shi, Aichi-ken, 471-8571 (JP)
(72) Inventor: Nakamura, Yoshifumi, Toyota-shi, Aichi-ken, 471-8571 (JP); Yoshihara, Masatomo, Toyota-shi, Aichi-ken, 471-8571 (JP); Uchida, Akito, Toyota-shi, Aichi-ken, 471-8571 (JP); Okamura, Kouji, Toyota-shi, Aichi-ken, 471-8571 (JP); Hatta, Yuuji, Toyota-shi, Aichi-ken, 471-8571 (JP); Masuda, Satoshi, Kariya-city, Aichi-pref. 448-8661 (JP)
(74) Representative: Winter, Brandl, Fürniss, Hübner, Röss, Kaiser, Polte - Partnerschaft mbB

(56) References cited:
- EP-A2- 2 199 579
- JP-A- S58 176 470
- JP-A- 2001 304 084
- JP-A- 2004 232 489
- JP-A- 2006 132 543
- JP-A- 2008 223 674
- JP-B2- 2 896 382
- US-A1- 2004 110 433

## Description

### BACKGROUND OF THE INVENTION

### 1. Field of the Invention

The invention relates to a startup control apparatus and method for an internal combustion engine, which executes automatic stoppage and automatic startup control.

### 2. Description of the Related Art

As disclosed in Japanese Patent Application Publication No. 2006-77605 (JP-A-2006-77605), for example, in a spark ignition type internal combustion engine, the internal combustion engine is stopped automatically when an engine stopping condition such as the vehicle becoming stationary is established, and when a restarting condition such as an accelerator operating amount reaching or exceeding a predetermined value is established during the automatic stoppage, the internal combustion engine is started automatically. By performing automatic stoppage and automatic startup control in this type of internal combustion engine, unnecessary engine operations are prevented, and therefore an improvement in fuel efficiency is achieved.

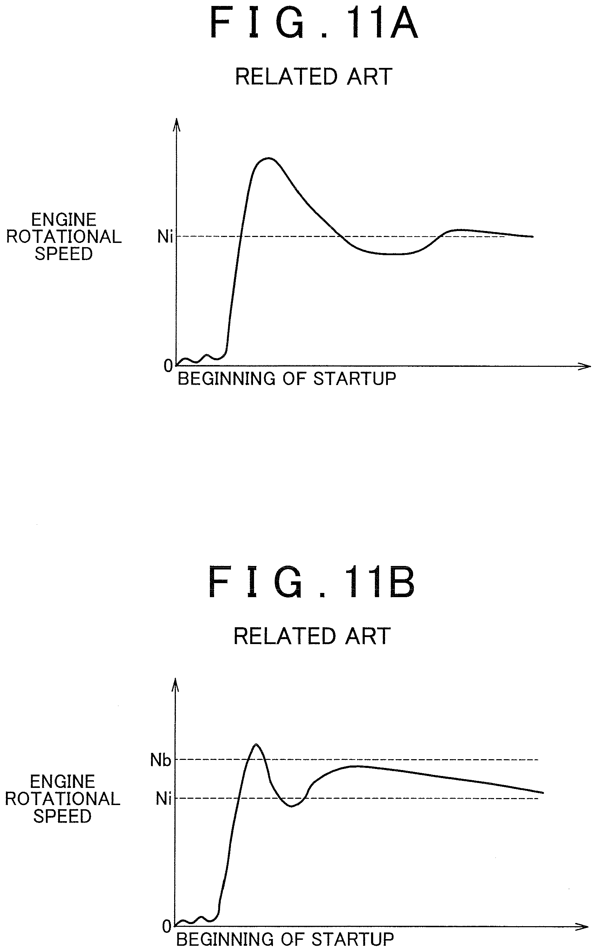

Incidentally, a rotational speed during engine startup varies in a different manner depending on whether startup is performed manually, through an ignition key operation, or automatically, as shown in FIGS. 11A and 11B.

More specifically, as shown in FIG. 11A, when the internal combustion engine is started manually, the engine rotational speed increases greatly immediately after startup, leading to racing. Following this racing, the engine rotational speed decreases gradually to a target idle rotational speed Ni, and having decreased to the idle rotational speed Ni, the engine rotational speed decreases further to fall greatly below the idle rotational speed Ni. The engine rotational speed then increases again until it converges with the target idle rotational speed Ni.

As shown in FIG. 11B, when the internal combustion engine is started automatically, on the other hand, the degree of rotational speed racing occurring immediately after engine startup is not as great, and the period of this initial racing is shorter than the racing period during manual startup. Moreover, although the degree by which the engine rotational speed falls following the initial rotational speed racing is not as great, rotational speed racing occurs again after the rotational speed has fallen.

In other words, to ensure that the internal combustion engine can be started reliably during both manual startup and automatic startup, the first few fuel injection operations immediately after engine startup (for example, the fuel injection operations performed during one to two revolutions of a crankshaft) are executed at an increased fuel injection amount relative to a fuel injection amount corresponding to the target idle rotational speed Ni. As a result, initial racing occurs in the rotational speed due to the increased fuel amount during both manual and automatic startup.

Further, to ensure that the internal combustion engine can be started reliably even at an extremely low temperature during manual startup, fuel injection is executed constantly without implementing a fuel cut even when the rotational speed exceeds the target idle rotational speed. In contrast, automatic startup is used to restart the engine following warm-up, and therefore a fuel cut is executed when the rotational speed rises excessively so as to exceed a reference rotational speed Nb that is higher than the target idle rotational speed, for example. Hence, the rotational speed racing that occurs immediately after the beginning of the startup operation during manual startup is greater than that during automatic startup. Furthermore, a fuel cut is not performed during manual startup, and therefore the total amount of fuel injected immediately after the beginning of the startup operation increases, leading to an increase in the amount of air consumed during combustion of the fuel. Accordingly, the amount of air existing in a combustion chamber is more likely to be insufficient during subsequent fuel combustion, causing the rotational speed to fall more easily. Note that during manual startup, a power generation load of an alternator is also applied to the internal combustion engine, and this power generation load also causes the rotational speed to fall greatly.

As described above, during automatic startup, a fuel cut is performed when the rotational speed increases excessively immediately after startup so as to reach or exceed the reference rotational speed Nb, and therefore the initial racing is smaller and the period of the racing is shorter than during manual startup. Following the initial rotational speed racing, the rotational speed temporarily falls due to the fuel cut, but the degree by which the rotational speed falls is smaller than the degree by which the rotational speed falls due to the lack of air in the combustion chamber during manual startup. Note that during automatic startup of the internal combustion engine, the power generation load of the alternator may be cut to suppress the rotational speed reduction caused by the fuel cut, and in this case, the rotational speed decrease following the racing that occurs immediately after startup is suppressed even further.

During automatic startup, a fuel cut is executed immediately after the beginning of startup, and therefore the amount of air used in the combustion chamber decreases. As a result, sufficient air exists in the combustion chamber even after the initial rotational speed racing. Hence, when fuel injection is executed after the rotational speed has decreased following the initial rotational speed racing, sufficient air exists in the combustion chamber, and therefore the rotational speed increases excessively again, leading to second racing.

As described above, the manner in which the engine rotational speed varies differs between manual startup and automatic startup. In both startup modes, the initial rotational speed racing that occurs immediately after the beginning of startup is indispensable to raise the rotational speed reliably so that the internal combustion engine is started reliably, but subsequent reductions and racing in the rotational speed need to be suppressed appropriately so that the rotational speed is converged with the target idle rotational speed. However, rotational speed control is not performed in accordance with the rotational speed behavior of the respective startup modes, and room for improvement remains in both the manual startup mode and the automatic startup mode in terms of ensuring that the rotational speed converges with the target idle rotational speed with stability.
It is the object of the subject matter of prior art document EP 2 199 579 A2 to determine how long to execute ignition timing retarding control until stoppage thereof in order to start advancing ignition timing control. In this document, a variable ignition timing control is always executed.
JP 2004 232 489 A discloses a startup control apparatus according to the preamble of claim 1.

### SUMMARY OF THE INVENTION

The invention provides a startup control apparatus and method for an internal combustion engine, with which a rotational speed can stability converge with a target idle rotational speed with during both manual startup and automatic startup.

A first aspect of the invention relates to a startup control apparatus for an internal combustion engine, which is applied to a spark ignition type internal combustion engine in which automatic stoppage and automatic startup are executed according to a predetermined condition, and which executes a fuel cut when a rotational speed of the internal combustion engine exceeds a reference rotational speed that is higher than a target idle rotational speed at the beginning of the automatic startup. The startup control apparatus includes: variable control means for executing ignition timing variable control during startup of the internal combustion engine such that an ignition timing of the internal combustion engine is retarded under a first condition and advanced under a second condition; and prohibiting means for setting respective conditions for prohibiting the ignition timing variable control executed by the variable control means during the manual startup of the internal combustion engine and during the automatic startup of the internal combustion engine individually.

In the above aspect, the first condition may indicate an increase in the rotational speed of the internal combustion engine during startup of the internal combustion engine, and the second condition may indicate a decrease in the rotational speed of the internal combustion engine during startup of the internal combustion engine.

In the above aspect, the prohibiting means sets a predetermined time from beginning of the startup during which the ignition timing variable control is prohibited to be longer during the automatic startup of the internal combustion engine than during the manual startup.

During both manual startup and automatic startup, the rotational speed must be increased reliably immediately after the beginning of engine startup, and therefore the fuel amount is increased so that rotational speed racing occurs. According to the above aspect, however, the ignition timing variable control is prohibited immediately after the beginning of startup during both manual startup and automatic startup, and therefore, when rotational speed racing occurs immediately after the beginning of startup, a situation in which the ignition timing variable control is executed unnecessarily to suppress this racing can be prevented.

During manual startup, the engine rotational speed is likely to fall greatly following initial racing. According to the above aspect, however, the ignition timing variable control is begun earlier during manual startup than during automatic startup, and therefore a situation in which ignition timing advancement control is executed to suppress a reduction in the rotational speed following the initial racing, leading to an increase in the rotational speed reduction that occurs following the initial racing, can be prevented.

During automatic startup, the rotational speed races immediately after the beginning of startup, then falls temporarily, and then races for a second time. If the ignition timing variable control is begun early during automatic startup, ignition timing advancement control may be performed to suppress a reduction in the rotational speed when the rotational speed decreases following the initial rotational speed racing that occurs immediately after the beginning of startup or when the rotational speed remains high following the second rotational speed racing, and as a result of this advancement control, the second rotational speed racing may increase. According to the above aspect, however, the predetermined time for prohibiting the ignition timing variable control during automatic startup is set to be longer than during manual startup, and therefore a situation in which the ignition timing variable control is begun early, leading to an increase in the second rotational speed racing, can be prevented.

Hence, according to the above aspect, a large reduction in the rotational speed following the initial racing can be suppressed during manual startup, and an increase in the second rotational speed racing can be suppressed during automatic startup. As a result, the rotational speed can be converged with the target idle rotational speed with stability in both of the startup modes.

In the above aspect, the variable control means may prohibit the variable control when the rotational speed of the internal combustion engine is neither increasing nor decreasing during startup of the internal combustion engine.

In the above aspect, the first condition may indicate the rotational speed of the internal combustion engine being higher than the target idle rotational speed during startup of the internal combustion engine, and the second condition may indicate the rotational speed of the internal combustion engine being lower than the target idle rotational speed during startup of the internal combustion engine.

In the above aspect, the prohibiting means sets a predetermined time during which the ignition timing variable control is prohibited to be longer during the automatic startup of the internal combustion engine than during the manual startup.

According to the above aspect, the ignition timing variable control is prohibited immediately after the beginning of startup during both manual startup and automatic startup, and therefore, when rotational speed racing occurs immediately after the beginning of startup, a situation in which the ignition timing variable control is executed unnecessarily to suppress this racing can be prevented.

During manual startup, the engine rotational speed is likely to fall greatly following initial racing. According to the above aspect, however, the ignition timing variable control is begun earlier during manual startup than during automatic startup, and therefore a situation in which the ignition timing is advanced when the rotational speed falls below the target idle rotational speed following the initial racing, leading to an increase in the rotational speed reduction that occurs following the initial rotational speed racing, can be prevented.

If the ignition timing variable control is begun early during automatic startup, ignition timing advancement control may be performed to set the rotational speed at the target idle rotational speed when the rotational speed falls below the target idle rotational speed following the racing that occurs immediately after the beginning of startup, and as a result, the second rotational speed racing may increase. According to the above aspect, however, the time for prohibiting the ignition timing variable control during automatic startup is set to be longer than during manual startup, and therefore a situation in which the ignition timing is advanced when the rotational speed falls below the target idle rotational speed following the initial racing, leading to an increase in the second rotational speed racing, can be prevented.

Hence, according to the above aspect, a large reduction in the rotational speed following the initial racing can be suppressed during manual startup, and an increase in the second rotational speed racing can be suppressed during automatic startup. As a result, the rotational speed can be converged with the target idle rotational speed with stability in both of the startup modes.

In the above aspect, the variable control means may prohibit the variable control when the rotational speed of the internal combustion engine is neither higher nor lower than the target idle rotational speed.

In the above aspect, a predetermined time during which the ignition timing variable control is prohibited during the manual startup may be a time extending from the beginning of the manual startup to a point at which the rotational speed of the internal combustion engine falls to the target idle rotational speed following rotational speed racing that occurs immediately after the beginning of the manual startup.

According to the above aspect, the ignition timing variable control is begun during manual startup when the engine rotational speed falls to the target idle rotational speed following the racing that occurs in the engine rotational speed immediately after the beginning of startup. Hence, the ignition timing is advanced when the engine rotational speed reaches the target idle rotational speed following the initial racing and then decreases further, and as a result, a situation in which the rotational speed decreases greatly following the racing that occurs immediately after the beginning of startup can be prevented.

In the above aspect, the predetermined time during which the ignition timing variable control is prohibited during the automatic startup may be a time extending from the beginning of the automatic startup to a point at which a deviation between an actual rotational speed and the target idle rotational speed falls to or below a predetermined rotational speed following second rotational speed racing in the engine.

According to the above aspect, the ignition timing variable control is begun during automatic startup when the deviation between the rotational speed and the target idle rotational speed falls to or below the predetermined rotational speed following the second rotational speed racing. Hence, a situation in which the ignition timing is advanced when the rotational speed decreases following the initial rotational speed racing that occurs immediately after the beginning of startup, when the rotational speed remains high following the second rotational speed racing, or when the rotational speed falls below the target idle rotational speed following the initial racing can be prevented. As a result, an increase in the second rotational speed racing caused by this ignition timing advancement control can be suppressed. Furthermore, the ignition timing variable control can be begun in a state where the deviation between the actual rotational speed and the target idle rotational speed has decreased to a certain extent following the second rotational speed racing.

In the above aspect, the first condition may indicate an increase in the rotational speed of the engine 11, and the second condition may indicate a decrease in the rotational speed of the internal combustion engine 11. The prohibiting means may prohibit the ignition timing variable control for a predetermined time following the beginning of startup of the internal combustion engine 11. The predetermined time during which the ignition timing variable control is prohibited during manual startup of the internal combustion engine 11 may be a time extending from the beginning of the manual startup to a point at which the rotational speed of the internal combustion engine 11 falls to the target idle rotational speed Ni following rotational speed racing occurring immediately after the beginning of the manual startup, and the predetermined time during which the ignition timing variable control is prohibited during automatic startup of the internal combustion engine 11 may be a time extending from the beginning of the automatic startup to a point at which a deviation between an actual rotational speed and the target idle rotational speed Ni falls to or below a predetermined rotational speed following the second rotational speed racing in the internal combustion engine 11.

During both manual startup and automatic startup, the rotational speed must be increased reliably immediately after the beginning of engine startup, and therefore the fuel amount is increased so that rotational speed racing occurs. According to the above aspect, the ignition timing variable control is prohibited immediately after the beginning of startup during both manual startup and automatic startup, and therefore, when rotational speed racing occurs immediately after the beginning of startup, a situation in which the ignition timing variable control is executed unnecessarily to suppress this racing can be prevented.

Further, according to the above aspect, the ignition timing variable control is begun during manual startup when the engine rotational speed falls to the target idle rotational speed following the rotational speed racing that occurs immediately after the beginning of startup. Hence, the ignition timing is advanced when the engine rotational speed reaches the target idle rotational speed following the initial racing and then decreases further, and as a result, a situation in which the rotational speed decreases greatly following the racing that occurs immediately after the beginning of startup can be prevented.

Furthermore, according to the above aspect, the ignition timing variable control is begun during automatic startup when the rotational speed decreases following the second racing such that the deviation between the rotational speed and the target idle rotational speed falls to or below the predetermined rotational speed. Hence, a situation in which the ignition timing is advanced when the rotational speed decreases following the initial rotational speed racing that occurs immediately after the beginning of startup or when the rotational speed remains high following the second rotational speed racing can be prevented. As a result, an increase in the second rotational speed racing caused by this ignition timing advancement control can be suppressed. Furthermore, the ignition timing variable control can be begun in a state where the deviation between the actual rotational speed and the target idle rotational speed has decreased to a certain extent following the second rotational speed racing.

In the above aspect, the first condition may indicate the rotational speed of the internal combustion engine 11 being higher than the target idle rotational speed, and the second condition may indicate the rotational speed of the internal combustion engine 11 being lower than the target idle rotational speed Ni during startup of the internal combustion engine 11. The prohibiting means may prohibit the ignition timing variable control for a predetermined time following the beginning of startup of the internal combustion engine 11. The predetermined time during which the ignition timing variable control is prohibited during manual startup of the internal combustion engine 11 may be a time extending from the beginning of the manual startup to a point at which the rotational speed of the internal combustion engine 11 falls to the target idle rotational speed Ni following rotational speed racing occurring immediately after the beginning of the manual startup, and the predetermined time during which the ignition timing variable control is prohibited during automatic startup of the internal combustion engine 11 may be a time extending from the beginning of the automatic startup to a point at which a deviation between an actual rotational speed and the target idle rotational speed Ni falls to or below a predetermined rotational speed following the second rotational speed racing in the internal combustion engine 11.

During both manual startup and automatic startup, the rotational speed must be increased reliably immediately after the beginning of engine startup, and therefore the fuel amount is increased so that rotational speed racing occurs. According to the above aspect, the ignition timing variable control is prohibited immediately after the beginning of startup during both manual startup and automatic startup, and therefore, when rotational speed racing occurs immediately after the beginning of startup, a situation in which the ignition timing variable control is executed unnecessarily to suppress this racing can be prevented.

Further, according to the above aspect, the ignition timing variable control is begun during manual startup when the engine rotational speed falls to the target idle rotational speed following the rotational speed racing that occurs immediately after the beginning of startup. Hence, the ignition timing is advanced when the engine rotational speed reaches the target idle rotational speed following the initial racing and then decreases further, and as a result, a situation in which the rotational speed decreases greatly following the racing that occurs immediately after the beginning of startup can be prevented.

Furthermore, in the above aspect, the ignition timing variable control is begun during automatic startup when the rotational speed decreases following the second racing such that the deviation between the rotational speed and the target idle rotational speed falls to or below the predetermined rotational speed. Hence, a situation in which the ignition timing is advanced when the rotational speed falls below the target idle rotational speed following the initial racing that occurs after the beginning of startup can be prevented, and as a result, an increase in the second rotational speed racing caused by this advancement control can be suppressed. Furthermore, the ignition timing variable control can be begun in a state where the deviation between the actual rotational speed and the target idle rotational speed has decreased to a certain extent following the second rotational speed racing.

In the above aspect, the first condition may indicate an increase in the rotational speed of the internal combustion engine 11 during startup of the internal combustion engine 11, and the second condition may indicate a decrease in the rotational speed of the internal combustion engine 11 during startup of the internal combustion engine 11. The prohibiting means may prohibit the ignition timing variable control when the actual rotational speed of the internal combustion engine 11 is equal to or higher than a predetermined rotational speed that is higher than the target idle rotational speed Ni. The predetermined rotational speed may be set at a lower rotational speed during the automatic startup of the internal combustion engine 11 than during the manual startup.

During both manual startup and automatic startup, the rotational speed must be increased reliably immediately after the beginning of engine startup, and therefore rotational speed racing occurs. In the above aspect, the ignition timing variable control is not executed when racing occurs in the engine rotational speed such that the actual engine rotational speed equals or exceeds the predetermined rotational speed that is higher than the target idle rotational speed, and the ignition timing variable control is executed when the actual engine rotational speed has approached the target idle rotational speed to a certain extent.

In the above aspect, a lower limit predetermined rotational speed at which the ignition timing variable control is prohibited is set at a lower rotational speed during automatic engine startup than during manual startup. Hence, during manual startup, ignition timing advancement control is begun before the rotational speed has decreased considerably following rotational speed racing, and therefore a situation in which the rotational speed falls greatly following rotational speed racing immediately after startup can be prevented.

Further, during automatic startup, if the ignition timing is advanced before the rotational speed has decreased considerably following the rotational speed racing that occurs immediately after startup or after the second rotational speed racing, the second racing may increase. According to the above aspect, however, the ignition timing variable control is executed during automatic startup once the rotational speed has decreased sufficiently following the rotational speed racing that occurs immediately after startup, and therefore a situation in which the ignition timing is advanced before the rotational speed has decreased considerably following the rotational speed racing, leading to an increase in the second racing, can be prevented.

In the above aspect, the prohibiting means may prohibit the ignition timing variable control for a predetermined time from the beginning of startup of the internal combustion engine.

During both manual startup and automatic startup, the rotational speed must be increased reliably immediately after the beginning of engine startup, and therefore rotational speed racing occurs. According to the above aspect, however, a situation in which the ignition timing variable control is executed unnecessarily to suppress the rotational speed racing that occurs immediately after the beginning of startup can be prevented.

Further, in the above aspect, the predetermined time may be a time extending from the beginning of the manual startup to a point at which the engine rotational speed falls to the target idle rotational speed following the rotational speed racing that occurs immediately after the beginning of the startup, and during automatic startup, the ignition timing variable control may be executed in a predetermined time having an identical length and set in the manner described above to extend from the beginning of startup.

In the above aspect, the initial rotational speed racing immediately following automatic engine startup occurs within a shorter period than the initial racing during manual startup, and therefore, when the predetermined time set in the manner described above has elapsed following the beginning of the automatic startup, the rotational speed has already decreased following the initial rotational speed racing. Hence, by prohibiting the ignition timing variable control for the duration of the predetermined time set in the manner described above during automatic startup also, a situation in which the ignition timing variable control is executed to advance the ignition timing while the rotational speed is decreasing following the initial racing that occurs immediately after the beginning of engine startup can be prevented. Therefore, according to the above aspect, an increase in the second rotational speed racing caused by this ignition timing advancement control can be suppressed.

In the above aspect, the predetermined time during manual startup may be a time extending to a point at which the rotational speed of the internal combustion engine falls to the target idle rotational speed following rotational speed racing, a time extending to a point at which a deviation between the rotational speed and the target idle rotational speed falls to or below a predetermined rotational speed, or a time extending to a point at which the rotational speed of the internal combustion engine reaches a maximum rotational speed during the rotational speed racing.

A second aspect of the invention relates to a startup control method for an internal combustion engine, which is applied to a spark ignition type internal combustion engine in which automatic stoppage and automatic startup are executed a according to predetermined condition, and which executes a fuel cut when a rotational speed of the internal combustion engine exceeds a reference rotational speed that is higher than a target idle rotational speed at the beginning of the automatic startup. The startup control method includes: executing ignition timing variable control during startup of the internal combustion engine such that an ignition timing of the internal combustion engine is retarded under a first condition and advanced under a second condition; and setting respective conditions for prohibiting the ignition timing variable control at the beginning of manual startup of the internal combustion engine and during the automatic startup of the internal combustion engine individually.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG. 1 is a schematic diagram showing an internal combustion engine and peripheral mechanisms thereof according to a first embodiment of a startup control apparatus for an internal combustion engine according to the invention;
FIG. 2 is a flowchart showing a procedure for executing fuel injection control during startup according to this embodiment;
FIG. 3 is a flowchart showing a procedure for executing power generation control during startup according to this embodiment;
FIG. 4 is a flowchart showing a procedure for executing ignition timing control during startup according to this embodiment;
FIG. 5 is a flowchart showing a procedure for executing ignition timing variable control according to this embodiment;
FIG. 6A is a timing chart showing an engine rotational speed and an ignition timing during manual startup according to this embodiment;
FIG 6B is a timing chart showing the engine rotational speed and the ignition timing during automatic startup according to this embodiment;
FIG. 7 is a flowchart showing a procedure for executing ignition timing variable control according to a second embodiment of the startup control apparatus for an internal combustion engine according to the invention;
FIG 8A is a timing chart showing the engine rotational speed and the ignition timing during manual startup according to this embodiment;
FIG. 8B is a timing chart showing the engine rotational speed and the ignition timing during automatic startup according to this embodiment;
FIG 9 is a flowchart showing a procedure for executing ignition timing control during startup according to an example of a startup control apparatus for an internal combustion engine not being part of the invention;
FIG 10A is a timing chart showing the engine rotational speed and the ignition timing during manual startup according to this example;
FIG 10B is a timing chart showing the engine rotational speed and the ignition timing during automatic startup according to this example;
FIG 11A is a timing chart showing the engine rotational speed during manual startup according to the related art; and
FIG. 11B is a timing chart showing the engine rotational speed during automatic startup according to the related art.

### DETAILED DESCRIPTION OF EMBODIMENTS

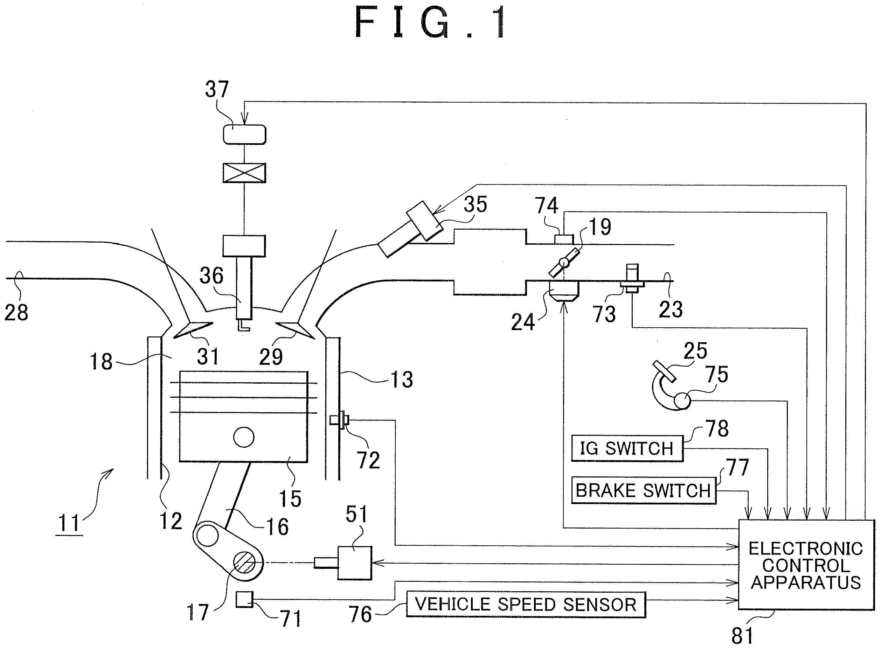

A first embodiment of a startup control apparatus for a vehicle-installed internal combustion engine according to the invention will be described below with reference to FIGS. 1 to 6 and FIGS. 11A and 11B.

FIG 1 shows an internal combustion engine 11 according to this embodiment and peripheral mechanisms thereof. The internal combustion engine 11 according to this embodiment is a petrol engine including: a combustion chamber 18 formed in each cylinder 12; an intake passage 23 that delivers intake air to the combustion chamber 18; and an exhaust passage 28 that discharges combustion gas generated in the combustion chamber 18 to the outside as exhaust gas.

A throttle valve 19 is provided rotatably in the intake passage 23. When the throttle valve 19 is rotated by driving a throttle motor 24, a flow rate of the air flowing through the intake passage 23 is changed, and as a result, the amount of air (intake air amount) supplied to the combustion chamber 18 is changed. Further, an injector 35 that injects fuel is attached to the intake passage 23 in accordance with each cylinder 12. Fuel injected by the injector 35 mixes with the intake air passing through the intake passage 23 to form an air-fuel mixture. Note that the fuel may be injected directly into the combustion chamber 18 of each cylinder 12 from the injector 35.

A spark plug 36 is attached to the combustion chamber 18 of each cylinder 12 so as to face the combustion chamber 18. The spark plug 36 is activated on the basis of an ignition signal from an igniter 37, whereby a high voltage output from an ignition coil (not shown) is applied. The aforementioned air-fuel mixture is ignited and burned by spark discharge from the spark plug 36, and a piston 15 is caused to reciprocate by high-temperature, high-pressure combustion gas generated at this time.

The reciprocation of the piston 15 is transmitted to a crankshaft 17 via a connecting rod 16, causing the crankshaft 17 to rotate such that a driving force (output torque) for driving the internal combustion engine 11 is obtained. Note that at the beginning of startup of the internal combustion engine 11, the crankshaft 17 is initially rotated through cranking performed by a starter motor 51. Further, a linkage between the combustion chamber 18 and the intake passage 23 is changed by an intake valve 29 and a linkage between the combustion chamber 18 and the exhaust passage 28 is changed by an exhaust valve 31.

The internal combustion engine 11 is subjected to various types of control by an electronic control apparatus 81 installed in the vehicle. The electronic control apparatus 81 includes a central processing unit (CPU) that executes various types of calculation processing relating to engine control, a read only memory (ROM) storing programs and data required for the control, a random access memory (RAM) that temporarily stores calculation results obtained by the CPU and so on, input/output ports that input and output signals from and to the outside, and so on.

Various sensors and the like for detecting the condition of various parts of the vehicle, including an operating condition of the internal combustion engine 11, are connected to the input port of the electronic control apparatus 81. These various sensors include a crank angle sensor 71 that outputs a pulse-form signal every time the crankshaft 17 rotates by a fixed angle, a water temperature sensor 72 that detects a cooling water temperature of the internal combustion engine 11, an air flow meter 73 that detects the flow rate of the air flowing through the intake passage 23, and a throttle sensor 74 that detects an opening of the throttle valve 19. The various sensors also include an accelerator sensor 75 that detects a depression amount of an accelerator pedal 25 by a driver, a vehicle speed sensor 76 that detects a traveling speed of the vehicle (vehicle speed), a brake switch 77 that detects an operation of a brake pedal (not shown) by the driver, and an ignition (IG) switch 78 that is turned ON when the internal combustion engine 11 is started by the driver and turned OFF when the internal combustion engine 11 is stopped by the driver.

Meanwhile, drive circuits for the injector 35, the spark plug 36, the throttle motor 24, and so on are connected to the output port of the electronic control apparatus 81.

With the above constitution, the electronic control apparatus 81 executes opening control of the throttle valve 19, fuel injection control relating to the injector 35, ignition timing control, and so on during an operation of the internal combustion engine 11. More specifically, during a normal operation of the internal combustion engine 11 following the completion of startup, the electronic control apparatus 81 controls the opening of the throttle valve 19 on the basis of the accelerator depression amount detected by the accelerator sensor 75. Further, the electronic control apparatus 81 controls the amount of fuel injected by the injector 35 on the basis of the intake air flow rate detected by the air flow meter 73 such that a ratio between the air and fuel supplied to the combustion chamber 18 corresponds to the stoichiometric air-fuel ratio (14.7). Furthermore, during a normal operation, the electronic control apparatus 81 derives a target ignition timing on the basis of operating conditions of the internal combustion engine 11 such as the engine load and engine rotational speed, and causes the spark plug 36 to ignite the air-fuel mixture at the target ignition timing by outputting an ignition signal that turns ON at the target ignition timing to the igniter 37 of each cylinder 12.

Furthermore, in this embodiment, the electronic control apparatus 81 performs automatic stop/start control for automatically stopping and automatically starting the internal combustion engine 11. In contrast to normal operation stoppage, in which the driver turns the ignition switch 78 OFF, automatic stoppage is performed to stop the internal combustion engine 11 automatically with the aim of improving the fuel efficiency and so on when the vehicle becomes temporarily stationary during travel while waiting for traffic lights to change, for example. Further, in contrast to normal startup, in which the driver switches the ignition switch 78 ON, automatic startup is used to restart the internal combustion engine 11 automatically in accordance with a startup request issued by the driver during the automatic stoppage described above.

Here, automatic stoppage is executed when a predetermined automatic stoppage condition is established during an operation of the internal combustion engine 11. The automatic stoppage condition may be established when (1) the internal combustion engine 11 is warm but not overheated, (2) the accelerator pedal 25 is not depressed, (3) a charge of a vehicle-installed battery (not shown) is at a required level, (4) the brake pedal is depressed, and (5) the vehicle is stationary (the vehicle speed is zero), for example. When all of the conditions (1) to (5) are satisfied on the basis of the detection signals from the various sensors described above, it is determined that the automatic stoppage condition is established. Note that the above conditions (1) to (5) are merely examples, and may be changed. Further, another condition may be added as an automatic stoppage condition.

Meanwhile, the electronic control apparatus 81 determines whether or not an automatic startup condition is established during automatic stoppage of the internal combustion engine 11, and when the automatic startup condition is established, the electronic control apparatus 81 performs control to start the internal combustion engine 11 automatically. It is determined here that the automatic startup condition is established when any one of the conditions (1) to (5) used as the automatic stoppage condition is not satisfied. In other words, when the accelerator pedal 25 is depressed (condition (2) not established) or the brake pedal is returned (condition (4) not established), for example, the automatic startup condition is established. Note that another condition may be set as the automatic startup condition.

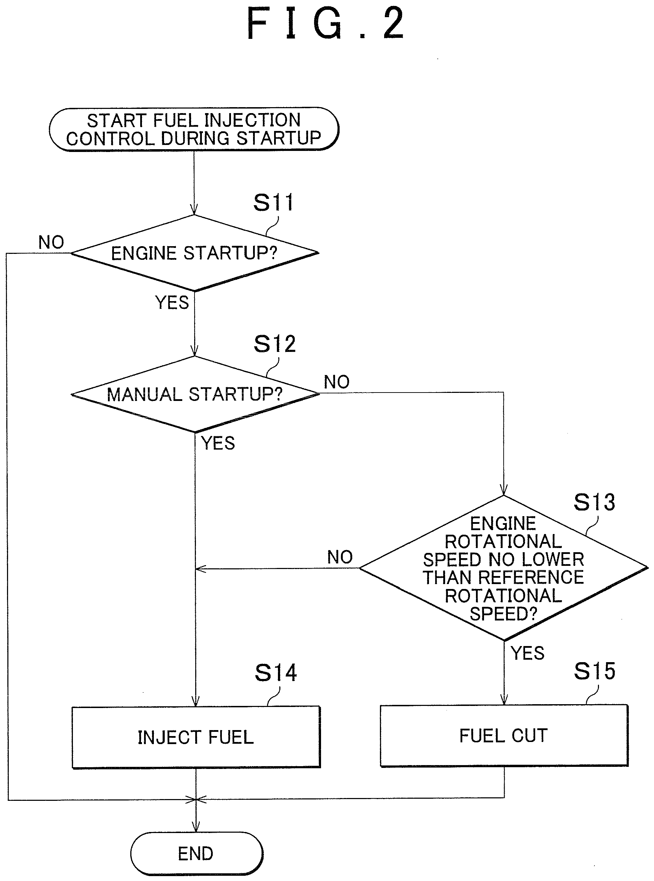

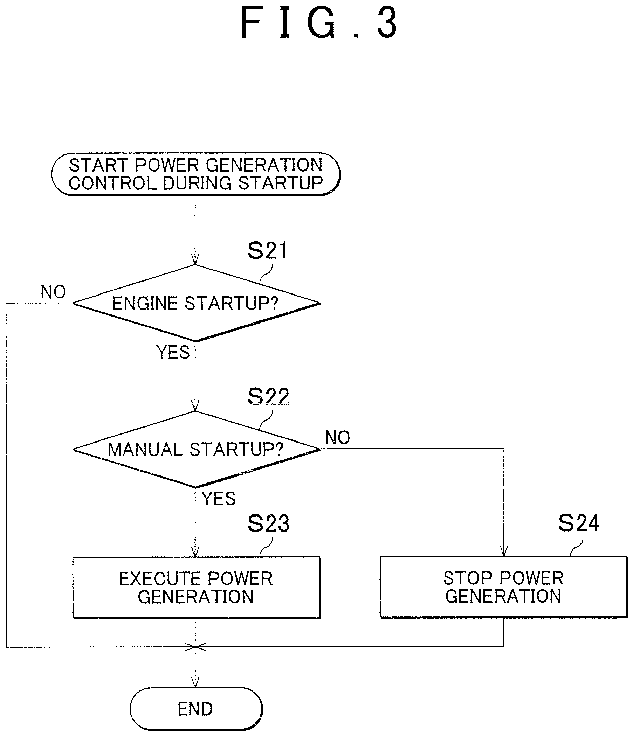

Incidentally, fuel injection control relating to the injector 35 and power generation control of an alternator (not shown) that generates power through rotation of the crankshaft 17 of the internal combustion engine 11 are executed differently during automatic startup and manual startup performed by switching the ignition switch 78 ON. The fuel injection control and alternator power generation control that are executed by the electronic control apparatus 81 during startup of the internal combustion engine 11 will now be described on the basis of FIGS. 2 and 3, respectively.

First, fuel injection control during startup will be described on the basis of a flowchart shown in FIG. 2. This control is executed in predetermined control periods during an operation of the internal combustion engine 11. First, in step S11 of the fuel injection control during startup, a determination is made as to whether or not startup is currently in progress in the internal combustion engine 11. When startup is not in progress in the internal combustion engine 11, the processing ends, where the current control is temporarily terminated, and normal fuel injection control following the completion of engine startup is executed.

When it is determined in step S11 that startup is currently in progress in the internal combustion engine 11, on the other hand, the processing advances to step S12, in which a determination is made as to whether or not the current engine startup operation is a manual startup operation, or in other words a startup operation executed by switching the ignition switch 78 ON. When the current engine startup operation is a manual startup operation, the processing advances to step S14, in which fuel injection is executed constantly by the injector 35 in the intake passage 23 corresponding to each cylinder 12.

More specifically, during manual startup, fuel injection is executed constantly to ensure that the engine rotational speed is increased reliably enabling startup of the internal combustion engine 11 even at an extremely low temperature, for example. Note that in the first few fuel injection operations (for example, the fuel injection operations performed during one to two revolutions of the crankshaft) performed during startup of the internal combustion engine 11, fuel is injected at an increased amount relative to a fuel amount for maintaining the engine rotational speed at an idle rotational speed Ni to ensure that the engine rotational speed increases reliably so that the internal combustion engine 11 can be started reliably, and in subsequent fuel injection operations, an amount of fuel for maintaining the engine rotational speed at the idle rotational speed Ni is injected. Hence, during manual startup, fuel injection is executed constantly, and therefore, even during startup at an extremely low temperature, the engine rotational speed is increased reliably so that the internal combustion engine 11 is started reliably.

When it is determined in step S12 that the startup that is currently in progress in the internal combustion engine 11 is not manual startup performed by switching the ignition switch 78 ON but automatic startup, the processing advances to step S13, in which a determination is made as to whether or not the engine rotational speed has exceeded a reference rotational speed which is considerably higher than the target idle rotational speed Ni. When it is determined in step S13 that the engine rotational speed is lower than the reference rotational speed, the processing advances to step S14, in which fuel injection is executed. When it is determined in step S13 that the engine rotational speed has reached or exceeded the reference rotational speed, the processing advances to step S15, in which a fuel cut is performed.

Here, the fuel injection amount during automatic startup is set similarly to manual startup such that in the first few fuel injection operations immediately after the beginning of startup, a larger amount of fuel than the fuel amount required to maintain the engine rotational speed at the idle rotational speed Ni is injected to ensure that the internal combustion engine 11 is started reliably, and subsequently, an amount of fuel for maintaining the engine rotational speed at the idle rotational speed Ni is injected. Furthermore, automatic startup is performed to restart the internal combustion engine 11 following warm-up, and therefore, when the increased fuel amount is injected, rotational speed racing occurring immediately after startup is likely to increase excessively. Hence, when the engine rotational speed is equal to or higher than the reference rotational speed, a fuel cut is executed in step S15. Automatic startup is performed to restart the internal combustion engine 11 following warm-up, and therefore the internal combustion engine 11 can be started reliably even when this fuel cut is executed.

Next, alternator power generation control during startup will be described on the basis of a flowchart shown in FIG. 3. The control shown in FIG. 3 is likewise performed in predetermined control periods during an operation of the internal combustion engine 11.

First, in step S21, a determination is made as to whether or not startup is currently in progress in the internal combustion engine 11. When startup is not currently in progress in the internal combustion engine 11, the processing ends, where the current control is temporarily terminated, and normal alternator power generation control following the completion of engine startup is executed.

When it is determined in step S21 that startup is currently in progress in the internal combustion engine 11, a determination is made in step S22 as to whether or not manual startup is currently in progress. When it is determined in step S22 that manual startup is currently in progress, the processing advances to step S23, in which alternator power generation is executed. More specifically, prior to manual startup of the internal combustion engine 11, it may be assumed that the internal combustion engine 11 has been stopped for a long time and that the battery capacity has decreased during the engine stoppage. Therefore, alternator power generation is executed at the beginning of manual startup. The processing then temporarily terminated.

On the other hand, when it is determined in step S22 that manual startup is not currently in progress, or in other words that automatic startup is currently in progress, the processing advances to step S24, in which alternator power generation is stopped. More specifically, during automatic stoppage of the internal combustion engine 11, condition (3) of the automatic stoppage condition, according to which the charge of the vehicle-installed battery (not shown) is at a required level, is satisfied, and it may therefore be assumed that the charge of the battery is at the required level during automatic startup also. Hence, there is no need to start alternator power generation immediately after startup, and therefore alternator power generation is stopped in step S24.

In the fuel injection amount control during startup described previously in FIG. 2, a fuel cut is executed during automatic startup when the engine rotational speed reaches or exceeds the reference rotational speed, and therefore, although the engine rotational speed may decrease rapidly due to the fuel cut, this rapid decrease in the rotational speed can be suppressed to a certain extent by stopping alternator power generation.

As shown in FIG. 11, the manner in which the engine rotational speed varies in accordance with the fuel injection control and alternator power generation control described above differs between automatic startup and manual startup performed by switching the ignition switch 78 ON. More specifically, as shown in FIG. 11A, during manual startup, the engine rotational speed increases greatly immediately after startup, leading to racing, and following this racing, the engine rotational speed decreases gradually, then falling greatly below the idle rotational speed Ni serving as a target rotational speed. The engine rotational speed then increases again until it converges with the target idle rotational speed Ni. As shown in FIG. 11B, when the internal combustion engine 11 is started automatically, on the other hand, the degree of rotational speed racing immediately after engine startup is not as great due to the fuel cut, and although the degree by which the rotational speed falls following the initial racing is not as great, rotational speed racing occurs again after the rotational speed has fallen. Note that even when alternator power generation is not stopped during automatic startup, the extent to which the engine rotational speed falls following the initial racing is smaller during automatic startup than during manual startup.

During both manual startup and automatic startup, fuel amount increase control is performed immediately after startup of the internal combustion engine 11 to ensure that the internal combustion engine 11 is started reliably, and therefore engine rotational speed racing is inevitable immediately after startup. However, subsequent decreases and racing in the rotational speed need to be suppressed appropriately so that the rotational speed converges with the idle rotational speed Ni. More specifically, during manual startup, the engine rotational speed is likely to fall greatly following the initial racing, and this fall must be suppressed, whereas during automatic startup, the second racing is likely to increase, and this racing increase must be suppressed.

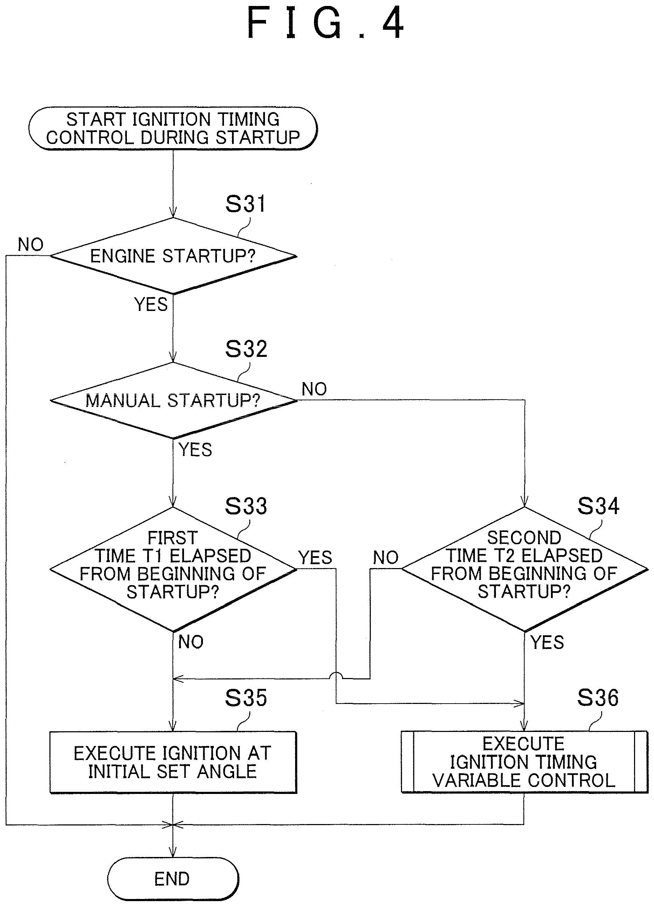

Hence, in this embodiment, the electronic control apparatus 81 acts as a startup control apparatus for the internal combustion engine 11 functioning as ignition timing variable control means and variable control prohibiting means to control the timing at which the spark plug 36 ignites the air-fuel mixture in order to suppress the rotational speed decrease that occurs during manual startup and suppress the second racing increase that occurs during automatic startup. In contrast to normal ignition timing control executed at the end of startup, described above, this ignition timing control is executed with the aim of converging the engine rotational speed with the idle rotational speed Ni during startup. Ignition timing control during startup will be described below on the basis of a flowchart shown in FIG. 4. This control is executed in predetermined control periods during an operation of the internal combustion engine 11.

First, in step S31 of the ignition timing control, a determination is made as to whether or not engine startup is currently in progress. When startup is not in progress in the internal combustion engine 11, the processing is temporarily terminated, whereupon ignition timing control during a normal operation is executed. When it is determined in step S31 that startup is currently in progress in the internal combustion engine 11, on the other hand, the processing advances to step S32, in which a determination is made as to whether or not manual startup is currently in progress.

When it is determined in step S32 that manual startup is currently in progress, the processing advances to step S33, in which a determination is made as to whether or not a first time T1 (2000 ms, for example) has elapsed following the beginning of startup in the internal combustion engine 11. Here, the first time T1 is a time period extending from the beginning of manual startup to a point at which the rotational speed falls to the target idle rotational speed Ni following the rotational speed racing that occurs immediately after the beginning of startup, which is set in advance through experiment or the like. Note that instead of determining whether or not the first time T1 has elapsed following the beginning of engine startup by measuring the elapsed time from the beginning of startup in step S33, a determination may be made as to whether or not the engine rotational speed has fallen to the target idle rotational speed Ni after temporarily racing on the basis of the detection signal from the crank angle sensor 71.

When it is determined in step S33 that the first time T1 has not yet elapsed, the processing advances to step S35, in which execution of ignition timing variable control, to be described subsequently in step S36, is prohibited and the air-fuel mixture is ignited at an initial set angle. Here, the initial set angle is set in advance at a crank angle that is slightly advanced relative to a crank angle at which the piston 15 of each cylinder 12 reaches top dead center during a compression stroke in which the piston 15 rises from bottom dead center to top dead center. Further, the initial set angle is set such that knocking does not occur even when the air-fuel mixture is ignited at a slightly advanced timing relative to the initial set angle. Therefore, when the first time T1 has not yet elapsed during manual startup, ignition timing variable control is prohibited and ignition is executed at the initial set angle. Hence, when the first time T1 has not yet elapsed following the beginning of startup and rotational speed racing occurs at the beginning of startup so that the engine rotational speed increases reliably, unnecessary ignition timing variable control for suppressing this racing is not executed.

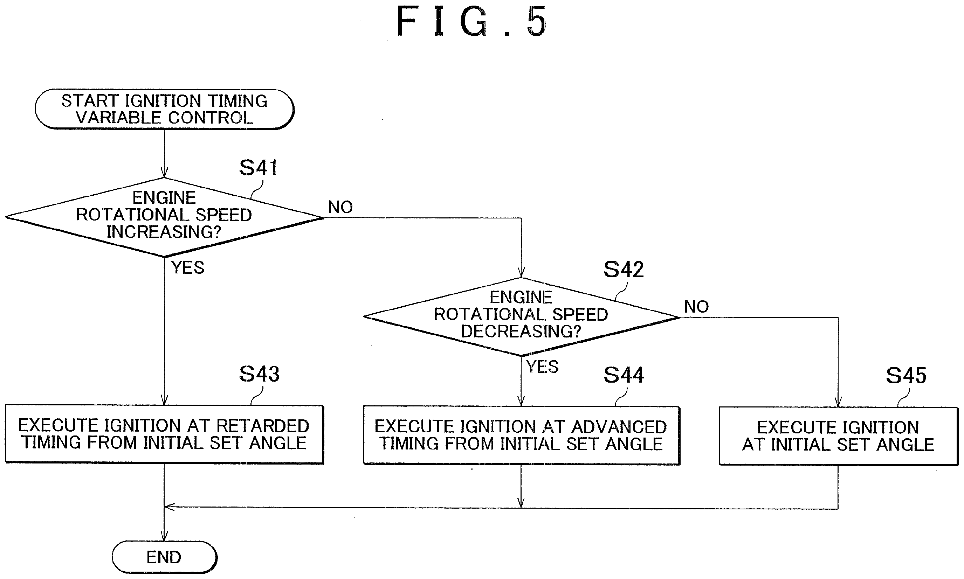

When it is determined in step S33 that the first time T1 has elapsed following the beginning of engine startup, on the other hand, the processing advances to step S36, in which the ignition timing variable control is executed. This ignition timing variable control is executed in accordance with a procedure shown in FIG. 5. More specifically, first, in step S41, a determination is made as to whether or not the engine rotational speed is currently increasing. When it is determined in step S41 that the engine rotational speed is increasing, the processing advances to step S43, in which ignition is executed by the spark plug 36 at a retarded timing relative to the initial set angle. The current control is then temporarily terminated.

On the other hand, when it is determined in step S41 that the engine rotational speed is not increasing, the processing advances to step S42, in which a determination is made as to whether or not the engine rotational speed is currently decreasing. When it is determined in step S42 that the engine rotational speed is decreasing, the processing advances to step S44, in which ignition is executed by the spark plug 36 at an advanced timing relative to the initial set angle. The current processing is then temporarily terminated. When it is determined in step S42 that the engine rotational speed is not decreasing, the engine rotational speed is determined to be unvarying, and therefore ignition is executed at the initial set angle.

Hence, in the ignition timing variable control, control is executed to retard the timing at which the air-fuel mixture is ignited by the spark plug 36 when the engine rotational speed is increasing and advance the timing at which the air-fuel mixture is ignited by the spark plug 36 when the engine rotational speed is decreasing. Note that in the ignition timing variable control, the ignition timing may only be advanced or retarded by a preset fixed angle, or the angle of advancement or retardation may be varied in accordance with the manner in which the engine rotational speed decreases or increases and so on, for example.

As described above, when the first time T1 has elapsed following the beginning of the startup operation during manual startup, the ignition timing variable control is executed, and therefore, after the engine rotational speed has fallen to the idle rotational speed Ni following temporary racing, control is executed in the ignition timing variable control to converge the engine rotational speed with the idle rotational speed Ni. Hence, when the engine rotational speed increases, the increase in the engine rotational speed is suppressed by retarding the ignition timing, and when the engine rotational speed decreases, the decrease in the engine rotational speed is suppressed by advancing the ignition timing.

Meanwhile, when it is determined in step S32 of FIG. 4 that manual startup is not currently in progress, or in other words that automatic startup is in progress, the processing advances to step S34, in which a determination is made as to whether or not a second time T2 (5000 ms, for example) has elapsed following the beginning of startup in the internal combustion engine 11. Here, the second time T2 is set to be longer than the first time T1, or more specifically at a time period extending from the beginning of automatic startup to a point at which a deviation between the actual rotational speed and the target idle rotational speed Ni is no larger than a predetermined rotational speed Δm following the second rotational speed racing, which is set in advance through experiment or the like. In other words, when the second time T2 has elapsed following the beginning of automatic startup, it is determined that the actual rotational speed has approached the target idle rotational speed Ni to a certain extent. Note that instead of determining whether or not the second time T2 has elapsed following the beginning of startup in step S34, a determination as to whether or not the deviation between the engine rotational speed following the second racing and the target idle rotational speed Ni is no larger than the predetermined rotational speed Δm may be made on the basis of the detection signal from the crank angle sensor 71. When it is determined in step S34 that the second time T2 has not yet elapsed following the beginning of startup, the processing advances to step S35, in which ignition is executed at the initial set angle. When it is determined in step S34 that the second time T2 has elapsed following the beginning of startup, on the other hand, the processing advances to step S36, in which the ignition timing variable control is executed.

In other words, following the elapse of the second time T2 during automatic startup of the internal combustion engine 11, control is executed to retard the timing at which the air-fuel mixture is ignited by the spark plug 36 when the engine rotational speed is increasing and advance the timing at which the air-fuel mixture is ignited by the spark plug 36 when the engine rotational speed is decreasing.

Hence, during automatic startup, advancement of the ignition timing is suppressed when the rotational speed decreases following the initial rotational speed racing that occurs immediately after the beginning of startup and when the rotational speed is decreasing but remains high following the second rotational speed racing, and as a result, an increase in the second racing due to advancement of the ignition timing can be suppressed. When the engine rotational speed decreases following the second racing such that the deviation between the engine rotational speed and the idle rotational speed Ni falls to or below the predetermined rotational speed Δm, or in other words when the actual engine rotational speed has approached the target idle rotational speed Ni to a certain extent, the ignition timing variable control may be begun.

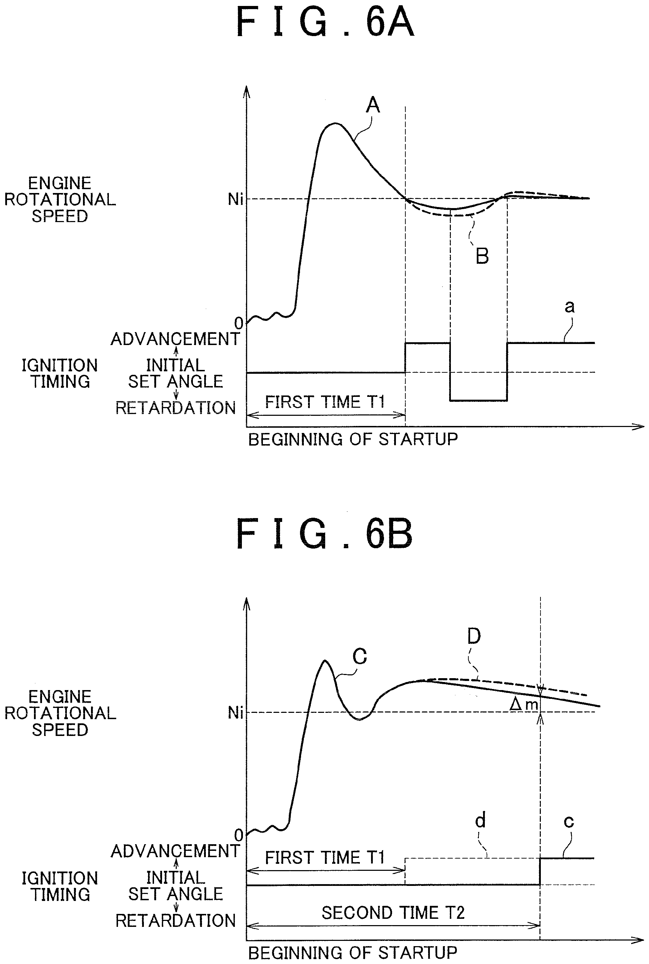

Actions and effects of the ignition timing control executed in accordance with the above procedures will now be described on the basis of FIGS. 6A and 6B.

FIGS. 6A and 6B are timing charts showing the engine rotational speed and the ignition timing during manual startup and automatic startup, respectively.

During manual startup, the rotational speed of the internal combustion engine 11 varies as shown by a solid line A in FIG. 6A. First, when manual startup of the internal combustion engine 11 begins, cranking is executed. Fuel is then injected in an increased amount and the air-fuel mixture containing this fuel is burned, causing the rotational speed to increase rapidly such that racing occurs. The engine rotational speed then decreases to the target idle rotational speed Ni. Further, during manual startup, the ignition timing variable control is prohibited and the ignition timing is set at the initial set angle from the beginning of startup to the elapse of the first time T1, or in other words until the rotational speed falls to the target idle rotational speed Ni after temporarily racing immediately after the beginning of startup.

Once the first time T1 has elapsed following the beginning of startup in the internal combustion engine 11, the engine rotational speed falls to the target idle rotational speed Ni and falls below the target idle rotational speed Ni thereafter. If the air-fuel mixture is ignited at the initial set angle even after the first time T1 has elapsed following the beginning of startup in the internal combustion engine 11, the engine rotational speed varies as shown by a dotted line B from the first time T1 onward. More specifically, the engine rotational speed falls greatly below the target idle rotational speed Ni after decreasing to the target idle rotational speed Ni following the initial racing.

In this embodiment, however, as shown in FIG. 6A, control is executed immediately after the elapse of the first time T1 following the beginning of manual startup to advance the ignition timing of the air-fuel mixture while the engine rotational speed is decreasing, as indicated by a solid line a, and therefore a large decrease in the engine rotational speed below the target idle rotational speed Ni following the elapse of the first time T1 can be suppressed. Further, when the engine rotational speed increases thereafter, the ignition timing is retarded, and therefore a large increase in the rotational speed beyond the idle rotational speed Ni can be suppressed. When this ignition timing variable control is executed in a condition where fuel has been injected in an amount corresponding to the idle rotational speed Ni, the engine rotational speed converges with the target idle rotational speed Ni.

Meanwhile, during automatic startup, the rotational speed of the internal combustion engine 11 varies as shown by a solid line C in FIG. 6B. More specifically, when startup of the internal combustion engine 11 begins, the rotational speed increases rapidly due to combustion of the air-fuel mixture following the execution of cranking, and as a result, racing occurs. The rotational speed decreases immediately thereafter, whereupon the second racing occurs. During automatic startup, the ignition timing is controlled as indicated by a solid line c such that from the beginning of startup to the elapse of the second time T2, or in other words until the deviation between the actual engine rotational speed and the target idle rotational speed Ni following the second rotational speed racing reaches the predetermined rotational speed Δm, the ignition timing variable control is prohibited and the ignition timing is set at the initial set angle.

In the ignition timing control performed during automatic startup, if the ignition timing variable control is begun once the first time T1 has elapsed following the beginning of startup in the internal combustion engine 11, similarly to manual startup, ignition timing advancement control is executed in a state where the engine rotational speed is decreasing following the second rotational speed racing but remains high, as shown by a dotted line d. In this case, as shown by a dotted line D in FIG. 6B, the engine rotational speed may vary such that the second racing increases.

In this embodiment, however, the ignition timing variable control is begun when the second time T2 has elapsed following the beginning of startup in the internal combustion engine 11, and therefore the control for converging the engine rotational speed with the target idle rotational speed can be executed after the engine rotational speed has decreased to a certain extent following the second rotational speed racing.

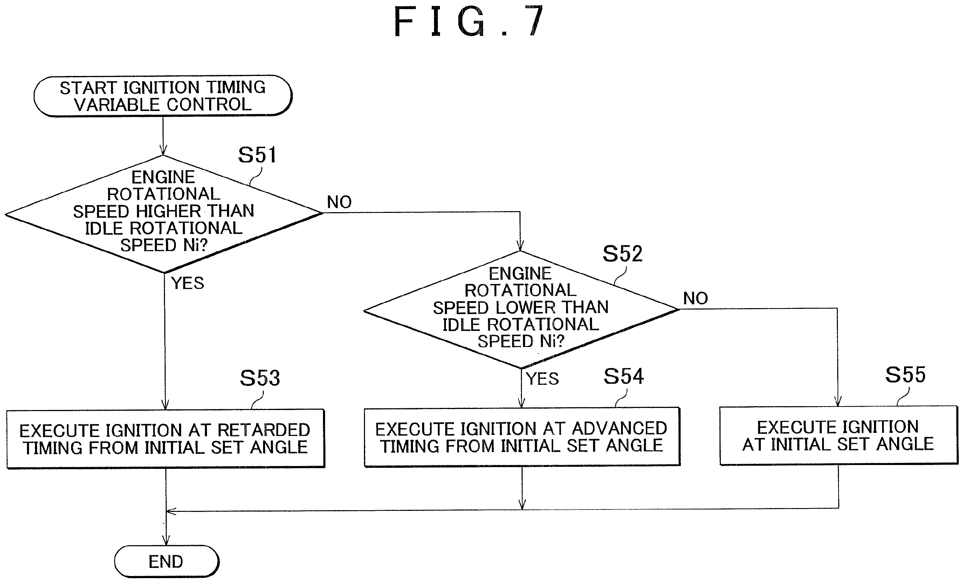

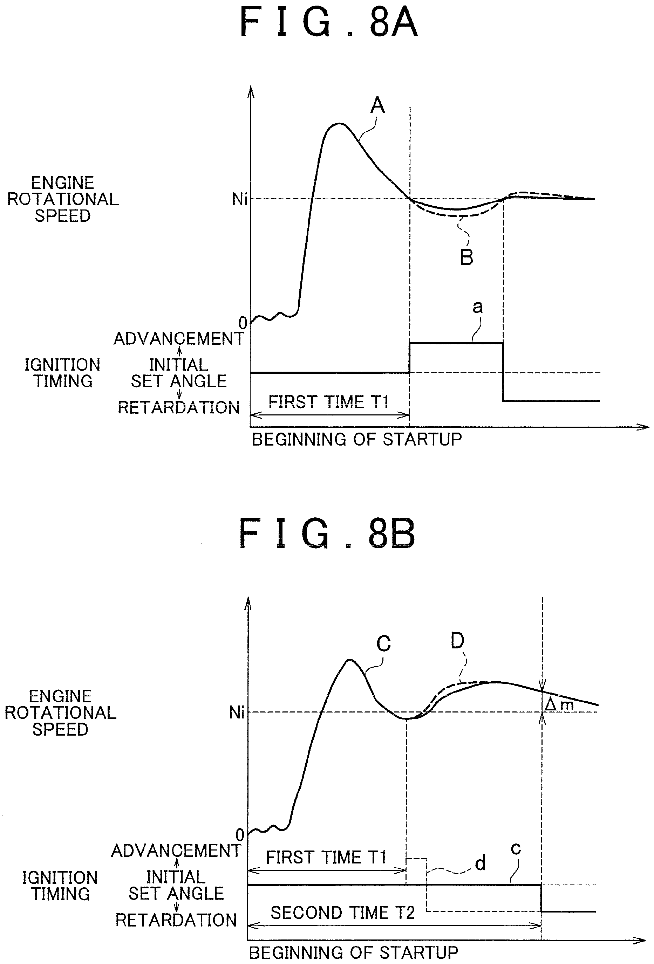

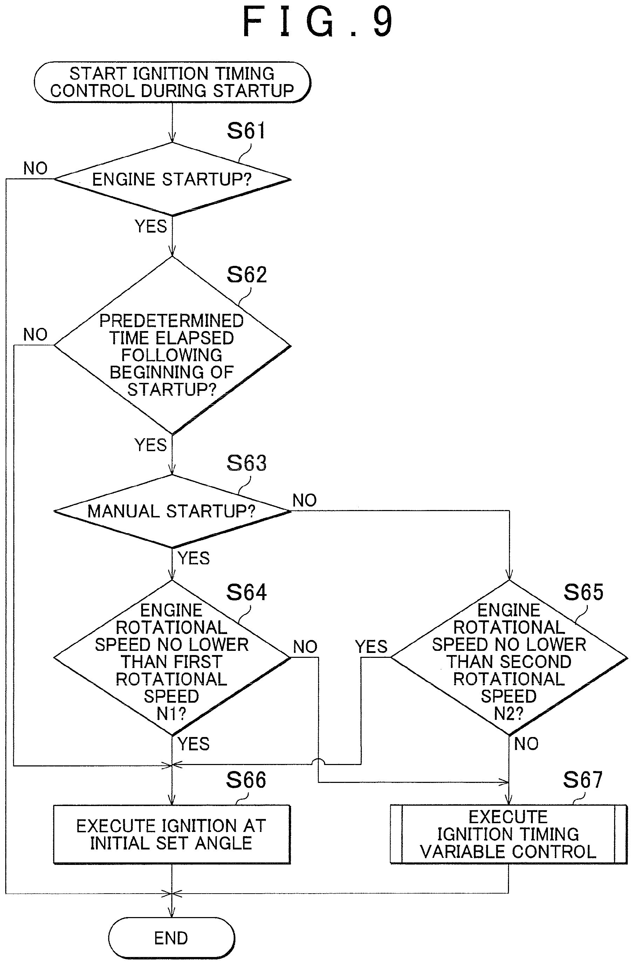

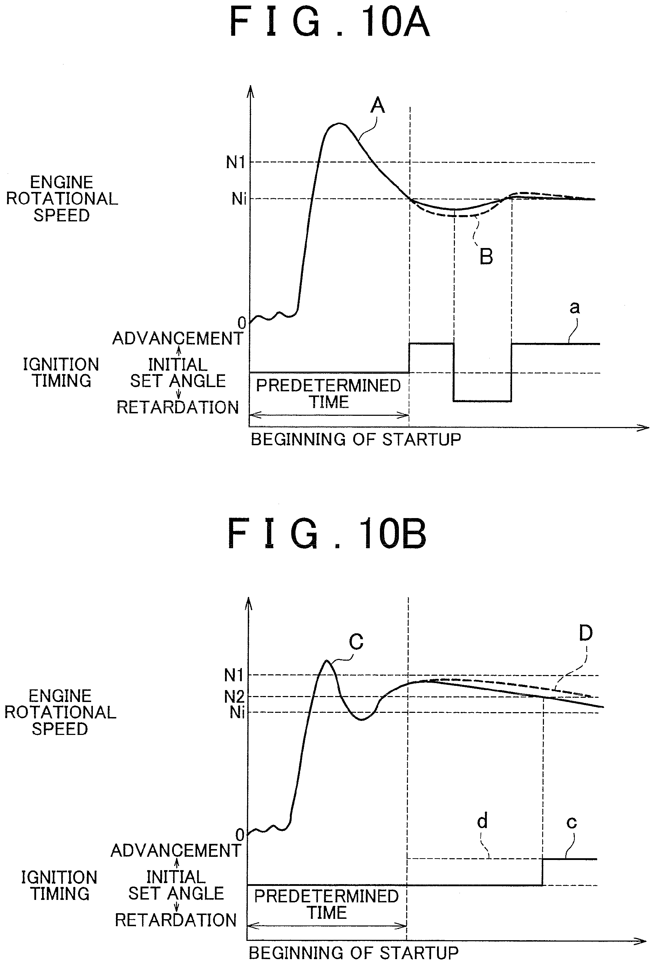

As described in detail above, according to the first embodiment, the following actions and effects can be obtained.
(1) In this embodiment, automatic stoppage and automatic startup are executed in the internal combustion engine 11, and a fuel cut is executed when, at the beginning of automatic startup, the engine rotational speed exceeds the reference rotational speed, which is higher than the target idle rotational speed Ni. Further, the ignition timing variable control is executed during startup of the internal combustion engine 11 such that when the engine rotational speed is increasing, the ignition timing is retarded, and when the engine rotational speed is decreasing, the ignition timing is advanced. Furthermore, during manual startup, the ignition timing variable control is prohibited from the beginning of startup to the elapse of the first time T1, and during automatic startup, the ignition timing variable control is prohibited from the beginning of startup to the elapse of the second time T2, which is longer than the first time T1.
   During both manual startup and automatic startup, the rotational speed of the internal combustion engine 11 must be increased reliably immediately after the beginning of startup, and therefore the fuel amount is increased so that rotational speed racing occurs. Accordingly, during both manual startup and automatic startup, the ignition timing variable control is prohibited immediately after the beginning of startup such that when rotational speed racing occurs immediately after the beginning of startup, a situation in which the ignition timing variable control is executed unnecessarily to suppress this racing can be prevented.
   Further, the ignition timing variable control is begun earlier during manual startup than during automatic startup, and therefore, when the engine rotational speed decreases following the initial racing, the ignition timing variable control can be executed to suppress this decrease, whereby an increase in the rotational speed reduction that occurs after the initial racing can be suppressed.
   Furthermore, during automatic control, the ignition timing variable control can be prevented from starting early, and therefore a situation in which ignition timing advancement control is performed to suppress a reduction in the engine rotational speed when the rotational speed decreases following the initial rotational speed racing that occurs immediately after the beginning of startup or the engine rotational speed remains high following the second rotational speed racing can be prevented. As a result, an increase in the second rotational speed racing during automatic startup can be suppressed.
   As described above, by suppressing a large reduction in the engine rotational speed following the initial racing during manual startup and suppressing an increase in the second rotational speed racing during automatic startup, the engine rotational speed can be converged with the target idle rotational speed Ni with stability during the respective startup operations.
(2) In this embodiment, the first time T1 during which the ignition timing variable control is prohibited during manual startup is set to a time extending from the beginning of manual startup to the point at which the rotational speed decreases to the target idle rotational speed Ni following the rotational speed racing that occurs immediately after the beginning of startup. Hence, when the engine rotational speed reaches the target idle rotational speed Ni following the initial racing and then decreases further during manual startup, the ignition timing is advanced, whereby an increase in the rotational speed reduction following the racing that occurs immediately after the beginning of startup can be suppressed.
(3) In this embodiment, the second time T2 during which the ignition timing variable control is prohibited during automatic startup is set to a time extending from the beginning of automatic startup to the point at which the deviation between the actual rotational speed and the target idle rotational speed Ni falls to or below the predetermined rotational speed following the second rotational speed racing. Hence, a situation in which the ignition timing is advanced when the rotational speed decreases following the initial rotational speed racing that occurs immediately after the beginning of startup or the rotational speed remains high following the second rotational speed racing can be prevented. As a result, an increase in the second rotational speed racing due to this ignition timing advancement control can be suppressed. Moreover, the ignition timing variable control can be started in a state where the deviation between the actual rotational speed and the target idle rotational speed Ni has decreased to a certain extent following the second rotational speed racing.
   Next, a second embodiment of the startup control apparatus for a vehicle-installed internal combustion engine according to the invention will be described with reference to FIGS. 1 to 4 and FIGS. 7 to 8B.
   In the second embodiment, the ignition timing variable control differs from the first embodiment described above, but all other constitutions and control processes are identical to those of the first embodiment, illustrated in FIGS. 1 to 4. Therefore, in the second embodiment, description of identical constitutions to the first embodiment has been omitted, and only the ignition timing variable control during startup that is different to the first embodiment will be described. Note that identical constitutions to the first embodiment will be described using identical reference symbols.
   In this embodiment also, the electronic control apparatus 81 serves as a startup control apparatus for the internal combustion engine 11, which executes ignition timing control during startup in accordance with the procedure shown in FIG. 4 to suppress a reduction in the rotational speed during manual startup and suppress an increase in the second racing during automatic startup.
   When it is determined in step S31 of the ignition timing control that engine startup is currently in progress and it is determined in step S32 that manual startup is currently in progress, the processing advances to step S33, in which a determination is made as to whether or not the first time T1 has elapsed following the beginning of startup. Here, similarly to the first embodiment, the first time T1 is a time period extending from the beginning of manual startup to the point at which the rotational speed falls to the target idle rotational speed Ni following the rotational speed racing that occurs immediately after the beginning of startup. When the first time T1 has not yet elapsed following the beginning of cranking, the processing advances to step S35, in which the air-fuel mixture is ignited at the initial set angle.
   When it is determined in step S33 that the first time T1 has elapsed following the beginning of engine startup, the processing advances to step S36, in which the ignition timing variable control is executed. The ignition timing variable control of the second embodiment is executed in accordance with a procedure shown in FIG. 7.
   More specifically, first, in step S51, a determination is made as to whether or not the engine rotational speed is higher than the target idle rotational speed Ni. When it is determined in step S51 that the engine rotational speed is higher than the target idle rotational speed Ni, the processing advances to step S53, in which ignition is executed by the spark plug 36 at a retarded timing from the initial set angle. The current control is then temporarily terminated.
   When it is determined in step S51 that the engine rotational speed is not increasing, on the other hand, the processing advances to step S52, in which a determination is made as to whether or not the engine rotational speed is lower than the target idle rotational speed Ni. When it is determined in step S52 that the engine rotational speed is lower than the target idle rotational speed Ni, the processing advances to step S54, in which ignition is executed by the spark plug 36 at an advanced timing from the initial set angle. The current control is then temporarily terminated. When it is determined in step S52 that the engine rotational speed is not lower than the idle rotational speed Ni, or in other words that the engine rotational speed is equal to the target idle rotational speed Ni, the processing advances to step S55, in which ignition is executed at the initial set angle.
   Hence, in the ignition timing variable control according to this embodiment, the timing at which the air-fuel mixture is ignited by the spark plug 36 is advanced when the engine rotational speed is lower than the target idle rotational speed Ni and retarded when the engine rotational speed is higher than the target idle rotational speed Ni.
   Therefore, in the ignition control during startup of this embodiment, shown in FIG. 4, when the first time T1 has elapsed following the beginning of the startup operation during manual startup, the ignition timing variable control is executed in the manner described above. Hence, when the engine rotational speed is higher than the target idle rotational speed Ni once the first time T1 has elapsed following the beginning of manual startup, an increase in the engine rotational speed is suppressed by retarding the ignition timing, and when the engine rotational speed is lower than the idle rotational speed Ni, a reduction in the engine rotational speed is suppressed by advancing the ignition timing.
   On the other hand, when it is determined in step S32 of FIG. 4 that manual startup is not currently in progress, or in other words that automatic startup is in progress, the processing advances to step S34, in which a determination is made as to whether or not the second time T2 has elapsed following the beginning of startup in the internal combustion engine 11. Similarly to the first embodiment, the second time T2 is set to be longer than the first time T1, or more specifically at a time period extending from the beginning of automatic startup to the point at which the deviation between the actual rotational speed and the target idle rotational speed Ni is no larger than the predetermined rotational speed following the second rotational speed racing. When it is determined in step S34 that the second time T2 has not yet elapsed following the beginning of startup, the processing advances to step S35, in which ignition is executed at the initial set angle. When it is determined in step S34 that the second time T2 has elapsed following the beginning of startup, the processing advances to step S36, in which the ignition timing variable control is executed.
   Hence, during automatic startup in the internal combustion engine 11, control is executed to retard the timing at which the air-fuel mixture is ignited by the spark plug 36 when the engine rotational speed is higher than the target idle rotational speed Ni following the elapse of the second time T2 and advance the ignition timing when the engine rotational speed is lower than the target idle rotational speed Ni.
   As a result, during automatic startup, a situation in which the ignition timing is advanced when the engine rotational speed is lower than the idle rotational speed Ni following the initial rotational speed racing that occurs immediately after the beginning of startup can be prevented, and therefore an increase in the second racing due to this advancement of the ignition timing can be suppressed. Further, following the second racing, the engine rotational speed decreases such that the deviation between the engine rotational speed and the idle rotational speed Ni is equal to or smaller than the predetermined rotational speed, and therefore the ignition timing variable control can be begun in a state where the deviation between the actual engine rotational speed and the target idle rotational speed has decreased to a certain extent.
   Actions and effects of the ignition timing control executed according to the above procedure will now be described on the basis of FIGS. 8A and 8B. FIGS. 8A and 8B are timing charts showing the engine rotational speed and the ignition timing during manual startup and automatic startup, respectively.
   During manual startup, the rotational speed of the internal combustion engine 11 varies as shown by a solid line A in FIG. 8A. More specifically, when startup of the internal combustion engine 11 begins, cranking is executed, whereupon the air-fuel mixture is burned, causing the rotational speed to increase rapidly such that racing occurs. The engine rotational speed then decreases to the target idle rotational speed Ni. Further, as shown by a solid line a, in the ignition timing control that is executed during manual startup, ignition timing variable control is prohibited and the ignition timing is set at the initial set angle from the beginning of startup to the elapse of the first time T1, or in other words until the rotational speed falls to the target idle rotational speed Ni after temporarily racing immediately after the beginning of startup.
   As shown by the solid line A, once the first time T1 has elapsed following the beginning of startup in the internal combustion engine 11, the engine rotational speed falls to the target idle rotational speed Ni and falls below the target idle rotational speed Ni thereafter. If the air-fuel mixture is ignited at the initial set angle even after the first time T1 has elapsed following the beginning of startup in the internal combustion engine 11, the engine rotational speed varies as shown by a dotted line B from the first time T1 onward.
   More specifically, after falling to the target idle rotational speed Ni following the initial racing, the engine rotational speed decreases greatly below the target idle rotational speed Ni. In this embodiment, however, the ignition timing is controlled as shown by the solid line a immediately after the first time T1 has elapsed such that control is executed to advance the ignition timing when the engine rotational speed is lower than the target idle rotational speed Ni, and therefore the engine rotational speed can be prevented from falling greatly below the target idle rotational speed Ni following the elapse of the first time T1. Further, when the engine rotational speed increases above the target idle rotational speed Ni thereafter, the ignition timing is retarded, and therefore the rotational speed can be prevented from increasing greatly beyond the idle rotational speed Ni. Hence, by executing this ignition timing variable control, the engine rotational speed can be converged with the target idle rotational speed Ni.
   Meanwhile, during automatic control, the rotational speed of the internal combustion engine 11 varies as shown by a solid line C in FIG. 8. More specifically, when startup of the internal combustion engine 11 begins, the rotational speed increases rapidly due to combustion of the air-fuel mixture following the execution of cranking, and as a result, racing occurs. The rotational speed decreases immediately thereafter, whereupon the second racing occurs. During automatic startup, the ignition timing variable control is prohibited and the ignition timing is set at the initial set angle from the beginning of startup to the elapse of the second time T2, or in other words until the deviation between the engine rotational speed and the target idle rotational speed Ni reaches the predetermined rotational speed Δm following the second racing that occurs after the beginning of startup in the internal combustion engine 11, as shown by a solid line c.
   If the ignition timing variable control is begun once the first time T1 has elapsed following the beginning of startup in the internal combustion engine 11 during automatic startup, similarly to manual startup, advancement control may be executed in a state where the engine rotational speed has temporarily fallen below the target idle rotational speed Ni following the initial rotational speed racing, as shown by a dotted line d. In this case, as shown by a dotted line D in FIG. 8B, the second racing may increase.
   In this embodiment, however, the ignition timing variable control is begun when the second time T2 has elapsed following the beginning of startup in the internal combustion engine 11, and therefore the control for converging the engine rotational speed with the target idle rotational speed Ni can be executed after the engine rotational speed has decreased to a certain extent following the second rotational speed racing. As a result, an increase in the second racing can be suppressed.
   As described in detail above, according to the second embodiment, the following actions and effects can be obtained.
(4) In this embodiment, automatic stoppage and automatic startup are executed in the internal combustion engine 11, and a fuel cut is executed when, at the beginning of automatic startup, the engine rotational speed exceeds the reference rotational speed, which is higher than the target idle rotational speed Ni. Further, the ignition timing variable control is executed such that when the engine rotational speed is lower than the target idle rotational speed Ni, the ignition timing of the internal combustion engine 11 is advanced, and when the engine rotational speed is higher than the target idle rotational speed Ni, the ignition timing is retarded. Furthermore, during manual startup, the ignition timing variable control is prohibited from the beginning of startup to the elapse of the first time T1, and during automatic startup, the ignition timing variable control is prohibited from the beginning of startup to the elapse of the second time T2, which is longer than the first time T1.
   Hence, during both manual startup and automatic startup, the ignition timing variable control is prohibited immediately after the beginning of startup, and therefore, when rotational speed racing occurs immediately after the beginning of startup, a situation in which the ignition timing variable control is executed unnecessarily to suppress this racing can be prevented.
   Further, the ignition timing variable control is begun earlier during manual startup than during automatic startup, and therefore a situation in which the ignition timing is advanced when the engine rotational speed falls below the target idle rotational speed Ni following the initial racing, causing the rotational speed to decrease greatly, can be prevented.
   Further, during automatic control, the ignition timing variable control can be prevented from starting early, and therefore a situation in which ignition timing advancement control is performed to suppress a reduction in the engine rotational speed when the rotational speed decreases below the target idle rotational speed Ni following the initial rotational speed racing that occurs immediately after the beginning of startup can be prevented. As a result, an increase in the second rotational speed racing during automatic startup can be suppressed.
   As described above, in this embodiment, by suppressing a large reduction in rotational speed following the initial racing during manual startup and suppressing an increase in the second rotational speed racing during automatic startup, the rotational speed can be converged with the target idle rotational speed Ni with stability during the respective startup operations.
(5) In this embodiment, the first time T1 during which execution of the ignition timing variable control is prohibited during manual startup is set to a time extending from the beginning of manual startup to the point at which the engine rotational speed decreases to the target idle rotational speed Ni following the rotational speed racing that occurs immediately after the beginning of startup. Hence, a situation in which the ignition timing is retarded when the engine rotational speed decreases following the initial racing but remains higher than the target idle rotational speed during manual startup can be prevented, and as a result, a large reduction in the engine rotational speed following the initial racing can be suppressed. Furthermore, when the engine rotational speed falls to the target idle rotational speed Ni following the initial racing and then decreases further so as to fall below the idle rotational speed Ni during manual startup, the ignition timing is advanced, and therefore a large reduction in the rotational speed following the racing that occurs immediately after the beginning of startup can be suppressed.
(6) In this embodiment, the second time T2 during which execution of the ignition timing variable control is prohibited during automatic startup is set to a time extending from the beginning of automatic startup to the point at which the deviation between the actual rotational speed and the target idle rotational speed Ni falls to or below the predetermined rotational speed following the second rotational speed racing. Hence, a situation in which the ignition timing is advanced when the engine rotational speed falls below the target idle rotational speed Ni following the initial rotational speed racing that occurs immediately after the beginning of startup can be prevented. As a result, an increase in the second rotational speed racing due to this ignition timing advancement control can be suppressed. Moreover, the ignition timing variable control can be started in a state where the deviation between the actual rotational speed and the target idle rotational speed Ni has decreased to a certain extent following the second rotational speed racing.
   Next, an example of a startup control apparatus for a vehicle-installed internal combustion engine helpful for understanding the invention will be described with reference to FIGS. 1 to 3, 5, 9, 10A and 10B.
   In the example, ignition timing control during startup differs from the first embodiment described above, but all other constitutions and control processes are identical to those of the first embodiment, illustrated in FIGS. 1 to 3 and FIG. 5. Therefore, in the example, description of identical constitutions to the first embodiment has been omitted, and only the ignition timing control during startup that is different to the first embodiment will be described. Note that identical constitutions to the first embodiment will be described using identical reference symbols.
   In this example also, the electronic control apparatus 81 serves as a startup control apparatus for the internal combustion engine 11 to control the ignition timing of the spark plug 36 in order to suppress a reduction in the rotational speed during manual startup and to suppress an increase in the second racing during automatic startup. The ignition timing control according to the example is executed in accordance with a procedure shown in a flowchart of FIG 9, instead of the control of the first embodiment shown in FIG. 4.
   First, in step S61 of the ignition timing control during startup according to the example, a determination is made as to whether or not engine startup is currently in progress. When it is determined in step S61 that engine startup is not currently in progress, normal ignition timing control following the completion of startup is executed. When it is determined in step S61 that engine startup is currently in progress, on the other hand, the processing advances to step S62, in which a determination is made as to whether or not a predetermined time has elapsed following the beginning of startup in the internal combustion engine 11. When the predetermined time has not elapsed following the beginning of startup in the internal combustion engine 11, the processing advances to step S66 without controlling the ignition timing variably, and the air-fuel mixture is ignited by the spark plug 36 at the initial set angle. In other words, when the predetermined time has not elapsed following the beginning of startup in the internal combustion engine 11, the ignition timing variable control is not executed at the beginning of either manual startup or automatic startup, and ignition is executed by the spark plug 36 at an initial ignition timing.
   Here, the predetermined time is set to be identical to the first time T1 of the first and second embodiments, or more specifically at a time period extending from the beginning of manual startup to the point at which the engine rotational speed falls to the target idle rotational speed Ni following the rotational speed racing that occurs immediately after the beginning of startup. Ignition of the air-fuel mixture is executed at the initial ignition timing until the predetermined time elapses following the beginning of startup. Hence, during both manual and automatic startup, fuel amount increase control is executed to ensure that the engine rotational speed increases reliably immediately after the beginning of engine startup, causing the engine rotational speed to race, but when this racing occurs in the engine rotational speed, the ignition timing variable control is not executed unnecessarily to suppress the racing.
   Further, during automatic startup, the ignition timing variable control is prohibited until a predetermined time having an identical length to the predetermined time used during manual startup has elapsed. During automatic startup, the rotational speed reduction following the initial rotational speed racing immediately after engine startup occurs earlier than during manual startup, and therefore, when the predetermined time elapses following the beginning of startup, the engine rotational speed is already decreasing following the initial racing. Hence, during automatic startup, a situation in which the ignition timing variable control is executed to advance the ignition timing before the initial post-racing reduction in the engine rotational speed does not arise, and therefore an increase in the second rotational speed racing caused by this ignition timing advancement control can be prevented.
   When it is determined in step S62 that the predetermined time has elapsed following the beginning of startup in the internal combustion engine 11, the processing advances to step S63, in which a determination is made as to whether or not manual startup is currently in progress. When it is determined in step S63 that manual startup is currently in progress, the processing advances to step S64, in which a determination is made as to whether or not the engine rotational speed is equal to or higher than a first rotational speed N1. Here, the first rotational speed N1 is set at a higher rotational speed than the target idle rotational speed (for example, the target idle rotational speed Ni + 500 rpm). When it is determined in step S64 that the engine rotational speed is equal to or higher than the first rotational speed N1, the processing advances to step S66, in which the air-fuel mixture is ignited by the spark plug 36 at the initial set angle. When it is determined in step S64 that the engine rotational speed is lower than the first rotational speed, on the other hand, the processing advances to step S67, in which the ignition timing variable control is executed. In other words, during manual startup, the ignition timing variable control is prohibited when the engine rotational speed is equal to or higher than the first rotational speed N1.
   In the ignition timing variable control of step S67, the control shown in FIG. 5 is executed. More specifically, control is executed to retard the timing at which the air-fuel mixture is ignited by the spark plug 36 when the engine rotational speed is increasing and advance the timing at which the air-fuel mixture is ignited by the spark plug 36 when the engine rotational speed is decreasing. The control shown in FIG. 7 may also be executed during the ignition timing variable control of step S67.
   Hence, during manual startup, the ignition timing variable control is prohibited such that ignition is executed at the initial set angle when the engine rotational speed is equal to or higher than the first rotational speed N1 following the elapse of the predetermined time from the beginning of startup, and when the rotational speed is lower than the first rotational speed N1, the ignition timing variable control is executed.
   On the other hand, when it is determined in step S63 of FIG. 9 that manual startup is not currently in progress, or in other words that automatic startup is currently in progress, the processing advances to step S65, in which a determination is made as to whether or not the engine rotational speed is equal to or higher than a second rotational speed N2. The second rotational speed N2 is set to be lower than the first rotational speed N1 and higher than the target idle rotational speed Ni (for example, the target idle rotational speed Ni + 200 rpm). When it is determined in step S65 that the engine rotational speed is lower than the second rotational speed N2, the processing advances to step S66, in which the ignition timing variable control is prohibited such that ignition is executed at the initial set angle, and when it is determined in step S65 that the engine rotational speed is equal to or higher than the second rotational speed N2, the processing advances to step S67, in which the ignition timing variable control is executed.
   Hence, during automatic startup in the internal combustion engine 11, a lower limit rotational speed value for prohibiting the ignition timing variable control, or in other words the second rotational speed N2, is set to be lower than the first rotational speed N1, i.e. the lower limit rotational speed value for prohibiting the ignition timing variable control during manual startup. During automatic startup, the second rotational speed racing is likely to increase, and therefore, if the ignition timing is advanced in a state where the rotational speed has decreased following the second rotational speed racing but has not decreased considerably, the second racing may increase further. In this example, however, the lower limit rotational speed value for prohibiting the ignition timing variable control is lower during automatic startup than during manual startup, and therefore, during automatic startup, the ignition timing variable control is executed once the rotational speed has decreased sufficiently following the rotational speed racing that occurs immediately after startup. Hence, during automatic startup, an increase in the second racing caused by advancement of the ignition timing in a state where the engine rotational speed has not decreased considerably following rotational speed racing can be suppressed.
   Actions and effects of the ignition timing control executed in accordance with the above procedures will now be described on the basis of FIGS. 10A and 10B. FIGS. 10A and 10B are timing charts showing the engine rotational speed and the ignition timing during manual startup and automatic startup, respectively.
   During manual startup, the rotational speed of the internal combustion engine 11 varies as shown by a solid line A in FIG. 10A. More specifically, when startup of the internal combustion engine 11 begins, cranking is executed, whereupon the air-fuel mixture is burned, causing the rotational speed to increase rapidly such that racing occurs. The engine rotational speed then decreases to the target idle rotational speed Ni. Further, as shown by a solid line a, during manual startup, the ignition timing is set at the initial set angle from the beginning of startup to the elapse of the predetermined time, or in other words until the rotational speed falls to the target idle rotational speed Ni after temporarily racing immediately after the beginning of startup.
   Once the predetermined time has elapsed following the beginning of startup in the internal combustion engine 11, the engine rotational speed falls to the target idle rotational speed Ni and falls below the target idle rotational speed Ni thereafter. Here, if the air-fuel mixture is ignited at the initial set angle even after the predetermined time has elapsed following the beginning of startup in the internal combustion engine 11, the engine rotational speed varies as shown by a dotted line B. In this embodiment, however, the ignition timing variable control is executed as shown by the solid line a from the elapse of the predetermined time onward, and therefore the engine rotational speed can be prevented from falling greatly below the target idle rotational speed Ni, as shown by the solid line A.
   Note that in the example shown in FIG. 10A, the engine rotational speed does not exceed the first rotational speed N1 once the predetermined time has elapsed following the beginning of manual startup, but if the engine rotational speed were to reach or exceed the first rotational speed N1, the ignition timing variable control would be prohibited.
   Meanwhile, during automatic startup, the rotational speed of the internal combustion engine 11 varies as shown by a solid line C in FIG. 10B. During automatic startup, ignition timing variable control is prohibited such that the ignition timing is set at the initial set angle from the beginning of startup to the elapse of the predetermined time, similarly to manual startup. If the ignition timing variable control is executed when the engine rotational speed is lower than the first rotational speed N1 after the predetermined time has elapsed following the beginning of startup in the internal combustion engine 11 during automatic startup also, similarly to manual startup, the ignition timing is advanced beyond the initial set angle, as shown by a dotted line d, in a state where the engine rotational speed has decreased following the second rotational speed racing but remains comparatively high. In this case, as shown by a dotted line D, the second rotational speed racing may increase. In this example, however, the ignition timing variable control is not executed as long as the engine rotational speed is equal to or higher than the second rotational speed N2, even when the predetermined time has elapsed following the beginning of startup in the internal combustion engine 11, and instead ignition is executed at the initial set angle. As a result, an increase in the second rotational speed racing can be suppressed, and variable control for converging the engine rotational speed with the target idle rotational speed Ni can be executed once the engine rotational speed has decreased to a certain extent following the second rotational speed racing.
   As described in detail above, according to the example, the following actions and effects can be obtained.
(7) In this example, automatic stoppage and automatic startup are executed in the internal combustion engine 11, and a fuel cut is executed when, at the beginning of automatic startup, the engine rotational speed exceeds the reference rotational speed, which is higher than the target idle rotational speed Ni. Further, the ignition timing variable control is executed during startup of the internal combustion engine 11 such that when the engine rotational speed is increasing, the ignition timing is retarded and when the engine rotational speed is decreasing, the ignition timing is advanced. Furthermore, during manual startup, the ignition timing variable control is prohibited when the engine rotational speed is equal to or higher than the first rotational speed N1, which is higher than the idle rotational speed, and during automatic startup, the ignition timing variable control is prohibited when the engine rotational speed is equal to or higher than the second rotational speed, which is higher than the idle rotational speed and lower than the first rotational speed N1.
   During both manual startup and automatic startup, the fuel amount is increased to ensure that the rotational speed increases reliably immediately after the beginning of engine startup, and as a result, rotational speed racing occurs. When the engine rotational speed rises excessively due to this racing so as to equal or exceed the first rotational speed N1 or the second rotational speed N2, both of which are higher than the idle rotational speed, the ignition timing variable control is prohibited. Accordingly, the ignition timing variable control is executed only when the actual engine rotational speed has approached the target idle rotational speed to a certain extent.
   Further, in the constitution described above, the lower limit predetermined rotational speed at which the ignition timing variable control is prohibited is set at a lower rotational speed during automatic engine startup than during manual startup. Hence, during automatic startup, the ignition timing variable control is executed once the rotational speed has decreased sufficiently following the rotational speed racing that occurs immediately after startup, and therefore a situation in which the ignition timing is advanced in a state where the rotational speed has not decreased considerably following the rotational speed racing, leading to an increase in the second racing, can be prevented.
(8) In this example, the ignition timing variable control is prohibited for the duration of the predetermined time following the beginning of startup in the internal combustion engine 11. During both manual startup and automatic startup, the rotational speed must be increased reliably immediately after the beginning of engine startup, and therefore rotational speed racing occurs. However, when rotational speed racing occurs immediately after the beginning of startup, the ignition timing variable control is not executed unnecessarily to suppress this racing.
(9) In this example, the predetermined time following the beginning of startup during which the ignition timing variable control is prohibited, described above in (8), is set to a time extending from the beginning of manual startup to the point at which the engine rotational speed decreases to the target idle rotational speed Ni following the rotational speed racing that occurs immediately after the beginning of manual startup. Hence, when the engine rotational speed falls to the target idle rotational speed Ni following the initial racing and then decreases further during manual startup, the ignition timing variable control is executed, and as a result, a further fall in the rotational speed below the target idle rotational speed Ni can be suppressed.

Further, during automatic startup, the engine rotational speed reduction following the initial racing occurs earlier than during manual startup, and therefore, when the predetermined time elapses following the beginning of startup, the engine rotational speed is already decreasing following the initial racing. Hence, during automatic startup, a situation in which the ignition timing variable control is executed to advance the ignition timing when the engine rotational speed is decreasing following the initial rotational speed racing can be prevented, and as a result, an increase in the second rotational speed racing caused by this ignition timing advancement control can be prevented.

Note that the above embodiments and examples may be modified appropriately in the manner described below.
(a) In the example, the ignition timing variable control is prohibited until the predetermined time elapses following the beginning of startup in the internal combustion engine 11. The predetermined time is set to a time extending from the beginning of manual startup to the point at which the engine rotational speed decreases to the target idle rotational speed Ni following the rotational speed racing that occurs immediately after the beginning of manual startup. However, the predetermined time may be set to a time extending to a point at which the engine rotational speed reaches a maximum rotational speed following the initial racing during manual startup, for example. In this case, during manual startup, ignition timing advancement control can be executed when the engine rotational speed has decreased below the first rotational speed N1 after racing so as to reach the maximum rotational speed, and therefore an increase in the engine rotational speed reduction that occurs after the initial racing can be suppressed.
(b) In the example, the ignition timing variable control is prohibited from the beginning of startup in the internal combustion engine 11 to the elapse of the predetermined time, but the predetermined time may be set at different lengths during manual startup and automatic startup.
(c) Further, in the example, instead of prohibiting the ignition timing variable control from the beginning of startup in the internal combustion engine 11 to the elapse of the predetermined time, the ignition timing variable control may be prohibited only when the engine rotational speed is equal to or higher than the first rotational speed N1 or the second rotational speed N2 following the beginning of startup in the internal combustion engine 11. In this case also, the lower limit predetermined rotational speed at which the ignition timing variable control is prohibited is set at a lower rotational speed during automatic engine startup than manual startup, and therefore ignition timing advancement control is begun when the rotational speed is decreasing following rotational speed racing but has not yet decreased considerably. As a result, a large reduction in the rotational speed following the rotational speed racing that occurs immediately after startup can be suppressed. Further, during automatic startup, the ignition timing variable control is executed once the rotational speed has decreased sufficiently following the rotational speed racing that occurs immediately after startup, and therefore an increase in the second racing caused by advancement of the ignition timing in a state where the engine rotational speed has not decreased considerably following the initial or second rotational speed racing can be suppressed.
(d) In the first and second embodiments, the ignition timing variable control is prohibited from the beginning of startup in the internal combustion engine to the elapse of the first time T1 during manual startup, and during automatic startup, the ignition timing variable control is prohibited from the beginning of startup in the internal combustion engine to the elapse of the second time T2, which is longer than the first time T1. Thus, the predetermined time for prohibiting the ignition timing variable control during startup of the internal combustion engine is set to be longer during automatic startup than during manual startup. Further, during manual startup, the first time T1 for prohibiting the ignition timing variable control is set to a time extending from the beginning of manual startup to the point at which the rotational speed falls to the target idle rotational speed following the rotational speed racing that occurs immediately after the beginning of the manual startup, while the second time T2 is set to a time extending from the beginning of automatic startup to the point at which the deviation between the actual rotational speed and the target idle rotational speed falls to or below the predetermined rotational speed following the second rotational speed racing.
   However, there are no particular limitations on the first time T1 and second time T2, and the predetermined time for prohibiting the ignition timing variable control may simply be set at a longer time during automatic startup than during manual startup.
(e) Further, instead of setting the predetermined time for prohibiting the ignition timing variable control to be longer during automatic startup than during manual startup, the predetermined times for prohibiting the ignition timing variable control may be set individually such that the predetermined time for prohibiting the ignition timing variable control during manual startup is set to a time extending from the beginning of the manual startup to the point at which the rotational speed decreases to the target idle rotational speed following the rotational speed racing that occurs immediately after the beginning of manual startup and the predetermined time for prohibiting the ignition timing variable control during automatic startup is set to a time extending from the beginning of automatic startup to the point at which the deviation between the actual rotational speed and the target idle rotational speed falls to or below the predetermined rotational speed following the second rotational speed racing. In this case, the predetermined times for prohibiting the ignition timing variable control during the respective startup operations may be determined in advance through experiment or the like. Further, the engine rotational speed following the beginning of startup may be detected such that the ignition timing variable control is executed when the actual engine rotational speed reaches the target idle rotational speed or the deviation between the actual engine rotational speed and the target idle rotational speed falls to or below the predetermined rotational speed.
   The ignition timing variable control described in the above embodiments and examples is executed during startup of the internal combustion engine to converge the engine rotational speed with the startup idle rotational speed following the beginning of engine startup, and does not therefore limit normal ignition timing control, fuel injection control, and so on performed when startup is complete.
(f) In the above embodiments and examples, the startup control apparatus of the invention is applied to a petrol engine serving as an internal combustion engine, but as long as the internal combustion engine is a spark ignition type engine, the startup control apparatus of the invention may be applied to an internal combustion engine that uses alcohol as a fuel or an internal combustion engine that uses a fuel obtained by mixing together alcohol and petrol at a desired ratio, for example.

## Claims

1. A startup control apparatus for an internal combustion engine (11), which is applied to a spark ignition type internal combustion engine (11) in which automatic stoppage and automatic startup are executed according to a predetermined condition, and which executes a fuel cut when a rotational speed of the internal combustion engine (11) exceeds a reference rotational speed that is higher than a target idle rotational speed (Ni) at the beginning of the automatic startup, the startup control apparatus comprising:
variable control means for executing ignition timing variable control during startup of the internal combustion engine (11) such that an ignition timing of the internal combustion engine (11) is retarded under a first condition and advanced under a second condition,
prohibiting means for setting respective conditions for prohibiting the ignition timing variable control executed by the variable control means during the manual startup of the internal combustion engine (11) and during the automatic startup of the internal combustion engine (11) individually,
wherein the first condition indicates an increase in the rotational speed of the internal combustion engine (11) during startup of the internal combustion engine (11); and
the second condition indicates a decrease in the rotational speed of the internal combustion engine (11) during startup of the internal combustion engine (11), or
wherein the first condition indicates the rotational speed of the internal combustion engine (11) being higher than the target idle rotational speed (Ni) during startup of the internal combustion engine (11); and
the second condition indicates the rotational speed of the internal combustion engine (11) being lower than the target idle rotational speed (Ni) during startup of the internal combustion engine (11),
wherein further the prohibiting means sets a predetermined time from beginning of the startup during which the ignition timing variable control is prohibited to be longer during the automatic startup of the internal combustion engine (11) than during the manual startup.

2. The startup control apparatus according to claim 1, wherein, when the rotational speed of the internal combustion engine (11) is neither increasing nor decreasing during startup of the internal combustion engine (11), the variable control means prohibits the variable control.

3. The startup control apparatus according to claim 1, wherein the prohibiting means sets a predetermined time during which the ignition timing variable control is prohibited to be longer during the automatic startup of the internal combustion engine (11) than during the manual startup.

4. The startup control apparatus according to claim 1 or 3, wherein, when the rotational speed of the internal combustion engine (11) is neither higher nor lower than the target idle rotational speed (Ni), the variable control means prohibits the variable control.

5. The startup control apparatus according to any one of claims 1 to 4, wherein a predetermined time during which the ignition timing variable control is prohibited during the manual startup is set to a time extending from the beginning of the manual startup to a point at which the rotational speed of the internal combustion engine (11) falls to the target idle rotational speed (Ni) following rotational speed racing that occurs immediately after the beginning of the manual startup.

6. The startup control apparatus according to any one of claims 1 to 5, wherein the predetermined time during which the ignition timing variable control is prohibited during the automatic startup is set to a time extending from the beginning of the automatic startup to a point at which a deviation between an actual rotational speed and the target idle rotational speed (Ni) falls to or below a predetermined rotational speed following second rotational speed racing in the engine.

7. The startup control apparatus according to claim 1, wherein:
the first condition indicates an increase in the rotational speed of the internal combustion engine (11) during startup of the internal combustion engine (11);
the second condition indicates a decrease in the rotational speed of the internal combustion engine (11) during startup of the internal combustion engine (11);
the prohibiting means prohibits the ignition timing variable control when an actual rotational speed of the internal combustion engine (11) equals or exceeds a predetermined rotational speed that is higher than the target idle rotational speed (Ni); and
the predetermined rotational speed is set at a lower rotational speed during the automatic startup of the internal combustion engine (11) than during the manual startup.

8. The startup control apparatus according to claim 7, wherein the prohibiting means prohibits the ignition timing variable control for a predetermined time following the beginning of startup of the internal combustion engine (11).

9. The startup control apparatus according to claim 8, wherein the predetermined time during the manual startup is set to a time extending to a point at which the rotational speed of the internal combustion engine (11) falls to the target idle rotational speed (Ni) following rotational speed racing, a time extending to a point at which a deviation between the rotational speed and the target idle rotational speed (Ni) falls to or below a predetermined rotational speed, or a time extending to a point at which the rotational speed of the internal combustion engine (11) reaches a maximum rotational speed during the rotational speed racing.

10. A startup control method for an internal combustion engine (11), which is applied to a spark ignition type internal combustion engine (11) in which automatic stoppage and automatic startup are executed according to a predetermined condition, and which executes a fuel cut when a rotational speed of the internal combustion engine (11) exceeds a reference rotational speed that is higher than a target idle rotational speed (Ni) at the beginning of the automatic startup, the startup control method comprising:
executing ignition timing variable control during startup of the internal combustion engine (11) such that an ignition timing of the internal combustion engine (11) is retarded under a first condition and advanced under a second condition; and
setting respective conditions for prohibiting the ignition timing variable control at the beginning of manual startup of the internal combustion engine (11) and during the automatic startup of the internal combustion engine (11) individually, wherein:
the first condition indicates an increase in the rotational speed of the internal combustion engine (11) during startup of the internal combustion engine (11); and
the second condition indicates a decrease in the rotational speed of the internal combustion engine (11) during startup of the internal combustion engine (11), or
wherein the first condition indicates the rotational speed of the internal combustion engine (11) being higher than the target idle rotational speed (Ni) during startup of the internal combustion engine (11); and
the second condition indicates the rotational speed of the internal combustion engine (11) being lower than the target idle rotational speed (Ni) during startup of the internal combustion engine (11)
wherein further prohibiting means setting a predetermined time from beginning of the startup during which the ignition timing variable control is prohibited to be longer during the automatic startup of the internal combustion engine (11) than during the manual startup.

## Patentansprüche

1. Startsteuerungsvorrichtung für einen Verbrennungsmotor (11), die in einem Verbrennungsmotor (11) vom Funkenzündungstyp einsetzbar ist, in dem ein automatisches Stoppen und ein automatisches Anlassen passend zu einer vorab festgelegten Bedingung ausgeführt werden, und das eine Kraftstoffabschaltung durchführt, wenn eine Drehzahl der Brennkraftmaschine (11) eine Referenzdrehzahl übersteigt, die höher als eine Sollleerlaufdrehzahl (Ni) zu Beginn des automatischen Anlaufens ist, wobei die Startsteuervorrichtung Folgendes umfasst:
eine Variabilitätssteuerungseinrichtung zum Ausführen der variablen Zündzeitpunktsteuerung während des Anlassens des Verbrennungsmotors (11) so, dass ein Zündzeitpunkt des Verbrennungsmotors (11) in einem ersten Zustand verzögert und in einem zweiten Zustand vorverstellt wird,
eine Verhinderungseinrichtung zum Einstellen jeweiliger Bedingungen zum Verhindern der Zündzeitpunktsteuerung , die von der Variabilitätssteuerungseinrichtung durchgeführt wird, individuell während des manuellen Anlassens des Verbrennungsmotors (11) und während des automatischen Anlassens des Verbrennungsmotors (11),
wobei die erste Bedingung eine Erhöhung der Drehzahl des Verbrennungsmotors (11) während des Anlassens des Verbrennungsmotors (11) anzeigt; und
die zweite Bedingung eine Verringerung der Drehzahl des Verbrennungsmotors (11) während des Anlassens des Verbrennungsmotors (11) anzeigt, oder
wobei die erste Bedingung anzeigt, dass die Drehzahl des Verbrennungsmotors (11) höher als die Sollleerlaufdrehzahl (Ni) während des Anlassens des Verbrennungsmotors (11) ist; und
die zweite Bedingung anzeigt, dass die Drehzahl des Verbrennungsmotors (11) niedriger als die Sollleerlaufdrehzahl (Ni) während des Anlassens des Verbrennungsmotors (11) ist;
wobei weiterhin die Verhinderungseinrichtung eine vorab festgelegte Zeit ab dem Beginn des Anlassens, während der die variable Zündzeitpunktsteuerung verhindert wird, während des automatischen Anlassens des Verbrennungsmotors (11) als länger als während des manuellen Anlassens festlegt.

2. Startsteuerungsvorrichtung nach Anspruch 1, wobei die Variabilitätssteuerungseinrichtung die variable Steuerung verhindert, wenn die Drehzahl der Brennkraftmaschine (11) während des Anlassens des Verbrennungsmotors (11) weder steigt noch fällt.

3. Startsteuerungsvorrichtung nach Anspruch 1, wobei die Verhinderungseinrichtung eine vorab festgelegte Zeit einstellt, während der verhindert wird, dass die variable Zündzeitpunktsteuerung während des automatischen Anlassens des Verbrennungsmotors (11) länger als während des manuellen Anlassens ist.

4. Startsteuerungsvorrichtung nach Anspruch 1 oder 3, wobei die Variabilitätssteuerungseinrichtung die Steuerung verhindert, wenn die Drehzahl des Verbrennungsmotors (11) weder höher noch niedriger als die Sollleerlaufdrehzahl (Ni) ist.

5. Startsteuerungsvorrichtung nach einem der Ansprüche 1 bis 4, wobei eine vorab festgelegte Zeit, während der die variable Zündzeitpunktsteuerung während des manuellen Anlassens verhindert wird, auf eine Zeit festgelegt wird, die sich vom Beginn des manuellen Anlassens zu einem Punkt erstreckt, an dem die Drehzahl des Verbrennungsmotors (11) nach einem Hochjagen der Drehzahl, das unmittelbar nach dem Beginn des manuellen Anlassens erfolgt, auf die Sollleerlaufdrehzahl (Ni) fällt.

6. Startsteuerungsvorrichtung nach einem der Ansprüche 1 bis 5, wobei eine vorab festgelegte Zeit, während der die variable Zündzeitpunktsteuerung während des automatischen Anlassens verhindert wird, auf eine Zeit festgelegt wird, die sich vom Beginn des automatischen Anlassens bis zu einem Punkt erstreckt, an dem eine Abweichung zwischen einer tatsächlichen Drehzahl und der Sollleerlaufdrehzahl (Ni) nach einem zweiten Hochjagen des Motors auf oder unter eine vorab festgelegte Drehzahl fällt.

7. Startsteuerungsvorrichtung nach Anspruch 1, wobei:
die erste Bedingung eine Erhöhung der Drehzahl des Verbrennungsmotors (11) während des Anlassens des Verbrennungsmotors (11) anzeigt;
die zweite Bedingung eine Verringerung der Drehzahl des Verbrennungsmotors (11) während des Anlassens des Verbrennungsmotors anzeigt;
die Verhinderungseinrichtung die variable Zündzeitpunktsteuerung verhindert, wenn eine tatsächliche Drehzahl des Verbrennungsmotors (11) gleich hoch wie oder höher als die Sollleerlaufdrehzahl (Ni) ist; und
die vorab festgelegte Drehzahl während des automatischen Anlassens des Verbrennungsmotors (11) auf eine geringere Drehzahl als während des manuellen Anlassens eingestellt ist.

8. Startsteuerungsvorrichtung nach Anspruch 7, wobei die Verhinderungseinrichtung die variable Zündzeitpunktsteuerung für eine vorab festgelegte Zeit nach dem Beginn des Anlassens des Verbrennungsmotors (11) verhindert.

9. Startsteuerungsvorrichtung nach Anspruch 8, wobei die vorab festgelegte Zeit während des manuellen Anlassens auf eine Zeit festgelegt ist, die bis zu einem Punkt dauert, an dem die Drehzahl des Verbrennungsmotors (11) nach dem Hochjagen der Drehzahl auf die Sollleerlaufdrehzahl (Ni) fällt, auf eine Zeit, die bis zu einem Punkt dauert, an dem eine Abweichung zwischen der Drehzahl und der Sollleerlaufdrehzahl (Ni) auf oder unter eine vorab festgelegte Drehzahl fällt, oder auf eine Zeit, die sich bis zu einem Punkt erstreckt, an dem die Drehzahl des Verbrennungsmotors (11) während des Hochjagens der Drehzahl eine maximale Drehzahl erreicht.

10. Startsteuerungsverfahren für einen Verbrennungsmotor (11), das für einen Verbrennungsmotor (11) vom Funkenzündungstyp einsetzbar ist, in dem ein automatisches Stoppen und ein automatisches Anlassen entsprechend einer vorab festgelegten Bedingung ausgeführt werden, und das eine Kraftstoffabschaltung ausführt, wenn eine Drehzahl des Verbrennungsmotors (11) eine Referenzdrehzahl übersteigt, die höher als eine Sollleerlaufdrehzahl (Ni) zu Beginn des automatischen Anlassens ist, wobei das Startsteuerungsverfahren Folgendes umfasst:
Ausführen einer variablen Zündzeitpunktsteuerung während des Anlassens des Verbrennungsmotors (11) so, dass ein Zündzeitpunkt des Verbrennungsmotors (11) unter einer ersten Bedingung vorverstellt und unter einer zweiten Bedingung verzögert wird; und
Festlegen jeweiliger Bedingungen zum Verhindern der variablen Zündzeitpunktsteuerung individuell am Beginn des manuellen Anlassens des Verbrennungsmotors (11) und während des automatischen Anlassens des Verbrennungsmotors (11), wobei:
die erste Bedingung eine Erhöhung der Drehzahl des Verbrennungsmotors (11) während eines Anlassens des Verbrennungsmotors (11) anzeigt; und
die zweite Bedingung eine Verringerung der Drehzahl des Verbrennungsmotors (11) während des Anlassens des Verbrennungsmotors (11) anzeigt, oder
wobei die erste Bedingung die Drehzahl des Verbrennungsmotors (11) anzeigt, die höher als die Sollleerlaufdrehzahl (Ni) während des Starts des Verbrennungsmotors (11) ist; und
die zweite Bedingung die Drehzahl des Verbrennungsmotors (11) anzeigt, die niedriger als die Sollleerlaufdrehzahl (Ni) während des Starts des Verbrennungsmotors (11) ist,
wobei weiterhin eine Verhinderungseinrichtung eine vorab festgelegte Zeit ab dem Beginn des Anlassens, während der die variable Zündzeitpunktsteuerung verhindert wird, während des automatischen Anlassens des Verbrennungsmotors (11) als länger als während des manuellen Anlassens einstellt.

## Revendications

1. Appareil de commande de démarrage destiné à un moteur à combustion interne (11), qui est appliqué à un moteur à combustion interne à allumage par étincelle (11) dans lequel un arrêt automatique et un démarrage automatique sont exécutés selon une condition prédéterminée, et qui exécute une coupure de l'alimentation en carburant lorsqu'une vitesse de rotation du moteur à combustion interne (11) dépasse une vitesse de rotation de référence qui est supérieure à une vitesse de rotation cible au ralenti (Ni) au début du démarrage automatique, l'appareil de commande de démarrage comprenant :
un moyen de commande variable destiné à exécuter une commande variable de moment d'allumage pendant le démarrage du moteur à combustion interne (11) de sorte qu'un moment d'allumage du moteur à combustion interne (11) soit retardé dans une première condition, et avancé dans une seconde condition,
un moyen d'empêchement destiné à définir des conditions respectives afin d'empêcher la commande variable de moment d'allumage exécutée par le moyen de commande variable pendant le démarrage manuel du moteur à combustion interne (11) et pendant le démarrage automatique du moteur à combustion interne (11) individuellement,
dans lequel la première condition indique une augmentation de la vitesse de rotation du moteur à combustion interne (11) pendant le démarrage du moteur à combustion interne (11) ; et
la seconde condition indique une diminution de la vitesse de rotation du moteur à combustion interne (11) pendant le démarrage du moteur à combustion interne (11), ou
dans lequel la première condition indique que la vitesse de rotation du moteur à combustion interne (11) est supérieure à la vitesse de rotation cible au ralenti (Ni) pendant le démarrage du moteur à combustion interne (11) ; et
la seconde condition indique que la vitesse de rotation du moteur à combustion interne (11) est inférieure à la vitesse de rotation cible au ralenti (Ni) pendant le démarrage du moteur à combustion interne (11),
dans lequel, en outre, le moyen d'empêchement définit une durée prédéterminée, à compter du début du démarrage, pendant laquelle la commande variable de moment d'allumage est empêchée, comme étant plus longue pendant le démarrage automatique du moteur à combustion interne (11) que pendant le démarrage manuel.

2. Appareil de commande de démarrage selon la revendication 1, dans lequel, lorsque la vitesse de rotation du moteur à combustion interne (11) n'augmente ni ne diminue pendant le démarrage du moteur à combustion interne (11), le moyen de commande variable empêche la commande variable.

3. Appareil de commande de démarrage selon la revendication 1, dans lequel le moyen d'empêchement définit une durée prédéterminée pendant laquelle la commande variable de moment d'allumage est empêchée comme étant plus longue pendant le démarrage automatique du moteur à combustion interne (11) que pendant le démarrage manuel.

4. Appareil de commande de démarrage selon la revendication 1 ou 3, dans lequel, lorsque la vitesse de rotation du moteur à combustion interne (11) n'est ni supérieure, ni inférieure à la vitesse de rotation cible au ralenti (Ni), le moyen de commande variable empêche la commande variable.

5. Appareil de commande de démarrage selon l'une quelconque des revendications 1 à 4, dans lequel une durée prédéterminée pendant laquelle la commande variable de moment d'allumage est empêchée pendant le démarrage manuel est définie sur une durée qui s'étend entre le début du démarrage manuel et un moment auquel la vitesse de rotation du moteur à combustion interne (11) chute jusqu'à la vitesse de rotation cible au ralenti (Ni) après un fonctionnement à la vitesse de rotation qui s'est produit juste après le début du démarrage manuel.

6. Appareil de commande de démarrage selon l'une quelconque des revendications 1 à 5, dans lequel la durée prédéterminée pendant laquelle la commande variable de moment d'allumage est empêchée pendant le démarrage automatique est définie sur une durée qui s'étend entre le début du démarrage automatique et un moment auquel un écart entre la vitesse de rotation réelle et la vitesse de rotation cible au ralenti (Ni) chute jusqu'à ou devient inférieure à une vitesse de rotation prédéterminée après un fonctionnement du moteur à la seconde vitesse de rotation.

7. Appareil de commande de démarrage selon la revendication 1, dans lequel :
la première condition indique une augmentation de la vitesse de rotation du moteur à combustion interne (11) pendant le démarrage du moteur à combustion interne (11) ;
la seconde condition indique une diminution de la vitesse de rotation du moteur à combustion interne (11) pendant le démarrage du moteur à combustion interne (11) ;
le moyen d'empêchement empêche la commande variable de moment d'allumage lorsque la vitesse de rotation réelle du moteur à combustion interne (11) est égale ou supérieure à une vitesse de rotation prédéterminée qui est supérieure à la vitesse de rotation cible au ralenti (Ni) ; et
la vitesse de rotation prédéterminée est définie sur une vitesse de rotation moins élevée pendant le démarrage automatique du moteur à combustion interne (11) que pendant le démarrage manuel.

8. Appareil de commande de démarrage selon la revendication 7, dans lequel le moyen d'empêchement empêche la commande variable de moment d'allumage pendant une durée prédéterminée après le début du démarrage du moteur à combustion interne (11).

9. Appareil de commande de démarrage selon la revendication 8, dans lequel la durée prédéterminée pendant le démarrage manuel est définie sur une durée qui s'étend jusqu'à un moment auquel la vitesse de rotation du moteur à combustion interne (11) chute jusqu'à la vitesse de rotation cible au ralenti (Ni) après un fonctionnement à la vitesse de rotation, sur une durée qui s'étend jusqu'à un moment auquel un écart entre la vitesse de rotation et la vitesse de rotation cible au ralenti (Ni) chute jusqu'à ou devient inférieure à une vitesse de rotation prédéterminée, ou sur une durée qui s'étend jusqu'à un moment auquel la vitesse de rotation du moteur à combustion interne (11) atteint une vitesse maximale pendant le fonctionnement à la vitesse de rotation.

10. Procédé de commande de démarrage destiné à un moteur à combustion interne (11), qui est appliqué à un moteur à combustion interne à allumage par étincelle (11) dans lequel un arrêt automatique et un démarrage automatique sont exécutée selon une condition prédéterminée, et qui exécute une coupure de l'alimentation en carburant lorsqu'une vitesse de rotation du moteur à combustion interne (11) dépasse une vitesse de rotation de référence qui est supérieure à une vitesse de rotation cible au ralenti (Ni) au début du démarrage automatique, le procédé de commande de démarrage comprenant :
l'exécution d'une commande variable de moment d'allumage pendant le démarrage du moteur à combustion interne (11) de sorte qu'un moment d'allumage du moteur à combustion interne (11) soit retardé dans une première condition, et avancé dans une seconde condition ; et
la définition de conditions respectives afin d'empêcher la commande variable de moment d'allumage au début du démarrage manuel du moteur à combustion interne (11) et pendant le démarrage automatique du moteur à combustion interne (11) individuellement, dans lequel :
la première condition indique une augmentation de la vitesse de rotation du moteur à combustion interne (11) pendant le démarrage du moteur à combustion interne (11) ; et
la seconde condition indique une diminution de la vitesse de rotation du moteur à combustion interne (11) pendant le démarrage du moteur à combustion interne (11), ou
dans lequel la première condition indique que la vitesse de rotation du moteur à combustion interne (11) est supérieure à la vitesse de rotation cible au ralenti (Ni) pendant le démarrage du moteur à combustion interne (11) ; et
la seconde condition indique que la vitesse de rotation du moteur à combustion interne (11) est inférieure à la vitesse de rotation cible au ralenti (Ni) pendant le démarrage du moteur à combustion interne (11),
dans lequel, en outre, le moyen d'empêchement définit une durée prédéterminée, à compter du début du démarrage, pendant laquelle la commande variable de moment d'allumage est empêchée, comme étant plus longue pendant le démarrage automatique du moteur à combustion interne (11) que pendant le démarrage manuel.
